# EUROPEAN PATENT APPLICATION

(11) **EP 4 716 339 A1**
(43) Date of publication of application: **25.03.2026**
(21) Application number: 24835239.5
(22) Date of filing: 20.06.2024
(51) Int. Cl.: H04W 72/0446

(54) **RESOURCE INDICATION METHOD AND APPARATUS**

(30) Priority: 04.07.2023 CN 202310816243
(71) Applicant: Huawei Technologies Co., Ltd., Shenzhen, Guangdong 518129 (CN)
(72) Inventor: HAN, Chao, Shenzhen, Guangdong 518129 (CN); LUO, Zhihu, Shenzhen, Guangdong 518129 (CN); JIN, Zhe, Shenzhen, Guangdong 518129 (CN)
(74) Representative: MERH-IP Matias Erny Reichl Hoffmann Patentanwälte PartG mbB
(86) International application number: PCT/CN2024/100493
(87) International publication number: WO 2025/007756

(57) **Abstract**

This application provides a resource indication method and an apparatus, and relates to the field of wireless communication technologies. In this application, a first apparatus can learn of a resource of a first network. The method includes: A first apparatus receives first information, and determines an available resource or an unavailable resource of a first network based on the first information. The first apparatus is served by the first network. The first network may be an ambient internet of things A-IoT. The first network and a long term evolution LTE network may be jointly deployed, and/or the first network and a narrowband internet of things NB-IoT may be jointly deployed. The first apparatus may be a terminal device.

## Description

This application claims priority to Chinese Patent Application No. 202310816243.1, filed with the China National Intellectual Property Administration on July 4, 2023 and entitled "RESOURCE INDICATION METHOD AND APPARATUS", which is incorporated herein by reference in its entirety.

### TECHNICAL FIELD

This application relates to the wireless communication field, and in particular, to a resource indication method and an apparatus.

### BACKGROUND

When an ambient internet of things (ambient internet of things, A-loT) network and a long term evolution (long term evolution, LTE) network are jointly deployed, a resource of a cell-specific reference signal (cell reference signal, CRS) of the LTE network is no longer allocated to the A-IoT network for use, to ensure communication performance of the LTE network.

However, when the A-IoT network and the LTE network are jointly deployed, how a terminal device learns of a resource of the A-IoT network is an urgent problem to be resolved.

### SUMMARY

To resolve the foregoing technical problem, this application provides a resource indication method and an apparatus, so that a terminal device can learn of a resource of an A-IoT network. To achieve the foregoing objective, this application uses the following technical solutions.

According to a first aspect, a resource indication method is provided. An execution body of the method may be a first apparatus. The first apparatus may be a terminal device, may be a component (for example, a processor, a chip, or a chip system) used in the terminal device, or may be a logical module or software that can implement all or some functions of the terminal device. The following provides descriptions by using an example in which the execution body is the first apparatus. The method includes: receiving first information; and determining an available resource or an unavailable resource of a first network based on the first information.

In other words, the first apparatus can receive the first information, and determine the available resource or the unavailable resource of the first network based on the first information. In this way, even if the first network is an ambient internet of things A-IoT network, and the first network and another network are jointly deployed, the first apparatus can learn of an available resource or an unavailable resource of the A-IoT network, and this helps improve system communication performance.

In a first possible design, the first information indicates that a time-frequency resource occupied by the first network is within a time-frequency resource of a second network; or the first information indicates that a time-frequency resource occupied by the first network is outside a time-frequency resource of a second network.

For example, the first network is the A-IoT network, and the second network is a long term evolution LTE network.

For another example, the first network is the A-IoT network, and the second network is a narrowband internet of things NB-IoT network.

That the first information indicates that the time-frequency resource occupied by the first network is within the time-frequency resource of the second network may include: Deployment of the first network and the second network is in-band deployment. In this case, the first apparatus needs to avoid the time-frequency resource occupied by the second network.

That the first information indicates that the time-frequency resource occupied by the first network is outside the time-frequency resource of the second network may include: Deployment of the first network and the second network is non-in-band deployment, or the second network is not deployed. In this case, the first apparatus does not need to avoid the time-frequency resource occupied by the second network.

In other words, the first information indicates a position relationship between the time-frequency resource of the first network and the time-frequency resource of the second network, so that the first apparatus learns whether to avoid the time-frequency resource occupied by the second network.

In a second possible design, that the first information indicates that the time-frequency resource occupied by the first network is within the time-frequency resource of the second network includes: The first information indicates that the time-frequency resource occupied by the first network is within the time-frequency resource of the second network in a first state. Alternatively, that the first information indicates that the time-frequency resource occupied by the first network is outside the time-frequency resource of the second network includes: The first information indicates that the time-frequency resource occupied by the first network is outside the time-frequency resource of the second network in a first state.

The first state includes at least one of the following: a first apparatus is in an idle state or a connected state, or the first apparatus has accessed the first network; and the method is applied to the first apparatus.

In other words, the first information further indicates the first state, so that the first apparatus learns that whether to avoid the time-frequency resource occupied by the second network is determined only in the first state.

In a third possible design, the first information indicates an antenna port quantity of the second network, and the antenna port quantity of the second network includes a first antenna port quantity, a second antenna port quantity, and a third antenna port quantity; and a state value of the first information includes a first value and a second value, where the first value indicates the first antenna port quantity and/or the second antenna port quantity, and the second value indicates the third antenna port quantity. For example, the second network is the LTE network.

For the second network, different antenna port quantities correspond to respective resource mapping patterns. In this way, the first apparatus can learn, based on the antenna port quantity that is of the second network and that is indicated by the first information, of a time-frequency resource occupied by a reference signal of the second network.

In a fourth possible design, the first antenna port quantity is 1, the second antenna port quantity is 2, and the third antenna port quantity is 4. For example, the second network is the LTE network.

In a fifth possible design, resource mapping patterns corresponding to the first antenna port quantity and the second antenna port quantity are the same. The resource mapping pattern corresponding to the first antenna port quantity may be understood as a resource mapping pattern occupied by a cell-specific reference signal CRS when the CRS is sent based on the first antenna port quantity. The resource mapping pattern corresponding to the second antenna port quantity may be understood as a resource mapping pattern occupied by CRSs when the CRSs are sent based on the second antenna port quantity. For example, the second network is the LTE network.

In a sixth possible design, the state value of the first information further includes a third value; the first value indicates that the time-frequency resource occupied by the first network is within the time-frequency resource of the second network; the second value indicates that the time-frequency resource occupied by the first network is within the time-frequency resource of the second network; and the third value indicates that the time-frequency resource occupied by the first network is outside the time-frequency resource of the second network or that the second network is not deployed, or the third value is a reserved state. For example, the second network is the LTE network.

In other words, in addition to indicating the antenna port quantity of the second network, the first information further indicates the position relationship between the time-frequency resource of the first network and the time-frequency resource of the second network, so that the first apparatus learns whether to avoid the time-frequency resource occupied by the reference signal of the second network.

In a seventh possible design, an antenna port is an antenna port of a cell-specific reference signal CRS; and the available resource of the first network does not include a time domain symbol occupied by the CRS, or the unavailable resource of the first network includes a time domain symbol occupied by the CRS.

The first apparatus does not support non-coherent demodulation. Correspondingly, the first apparatus cannot perform information demodulation at a resource element RE granularity. In this case, the first apparatus can also determine the available resource or the unavailable resource of the first network based on the time domain symbol occupied by the CRS.

In an eighth possible design, the first information indicates a symbol quantity of a control channel of the second network, and the symbol quantity includes a first symbol quantity, a second symbol quantity, and a third symbol quantity; and the state value of the first information includes a fourth value, a fifth value, and a sixth value, where the fourth value indicates the first symbol quantity, the fifth value indicates the second symbol quantity, and the sixth value indicates the third symbol quantity. For example, the second network is the LTE network.

For the second network, the control channel of the second network may occupy different quantities of symbols. In this way, the first apparatus can learn, based on the symbol quantity that is of the control channel of the second network and that is indicated by the first information, of a time domain resource occupied by the control channel of the second network.

In a ninth possible design, the state value of the first information further includes a seventh value; the fourth value indicates that the time-frequency resource occupied by the first network is within the time-frequency resource of the second network; the fifth value indicates that the time-frequency resource occupied by the first network is within the time-frequency resource of the second network; the sixth value indicates that the time-frequency resource occupied by the first network is within the time-frequency resource of the second network; and the seventh value indicates that the time-frequency resource occupied by the first network is outside the time-frequency resource of the second network or that the second network is not deployed, or the seventh value is the reserved state. For example, the second network is the LTE network.

In other words, in addition to indicating the symbol quantity of the control channel of the second network, the first information further indicates the position relationship between the time-frequency resource of the first network and the time-frequency resource of the second network, so that the first apparatus learns whether to avoid the time domain resource occupied by the control channel of the second network.

In a tenth possible design, the available resource of the first network does not include a time domain symbol occupied by the control channel; or the unavailable resource of the first network includes a time domain symbol occupied by the control channel.

In an eleventh possible design, when the state value of the first information includes the first value, the second value, the fourth value, the fifth value, or the sixth value, the first network and the second network are jointly deployed or coexist.

In a twelfth possible design, a time domain resource occupied by the first information is included in a first resource set, and the first resource set includes a time domain symbol identified by at least one of the following indexes: 3, 5, 6, 9, 10, 12, and 13.

In other words, the first resource set includes the available resource of the first network; and the CRS of the second network may occupy time domain symbols identified by the following indexes: 0, 4, 7, and 11, or the CRS of the second network may occupy time domain symbols identified by the following indexes: 0, 1, 4, 7, 8, and 11. Therefore, to avoid the CRS of the second network, the first resource set does not include the time-frequency resource occupied by the CRS of the second network.

In a thirteenth possible design, the first resource set further includes a time domain symbol identified by a first index, where the first index includes 0, 1, and 2, the first index includes 1 and 2, or the first index includes 2.

The control channel of the second network occupies a time domain symbol identified by the following index: 0, the control channel of the second network occupies time domain symbols identified by the following indexes: 0 and 1, the control channel of the second network occupies time domain symbols identified by the following indexes: 0, 1, and 2, or the control channel of the second network occupies a time domain symbol other than time domain symbols identified by the following indexes: 0, 1, and 2. Therefore, to avoid the control channel of the second network, the first resource set does not include the time domain resource occupied by the control channel of the second network.

In a fourteenth possible design, the first resource set is further for transmission of a data signal of the first network and/or a control signal of the first network.

In a fifteenth possible design, the first information indicates an antenna port quantity of the second network, and the antenna port quantity of the second network includes a first antenna port quantity and a second antenna port quantity; and a state value of the first information includes a first value, where the first value indicates the first antenna port quantity and/or the second antenna port quantity. For example, the second network is the NB-IoT network.

For the second network, different antenna port quantities correspond to respective resource mapping patterns. In this way, the first apparatus can learn, based on the antenna port quantity that is of the second network and that is indicated by the first information, of a time-frequency resource occupied by a reference signal of the second network.

In a sixteenth possible design, the first antenna port quantity is 1, and the second antenna port quantity is 2.

In a seventeenth possible design, resource mapping patterns corresponding to the first antenna port quantity and the second antenna port quantity are the same. The resource mapping pattern corresponding to the first antenna port quantity may be understood as a resource mapping pattern occupied by an NRS when the NRS is sent based on the first antenna port quantity. The resource mapping pattern corresponding to the second antenna port quantity may be understood as a resource mapping pattern occupied by NRSs when the NRSs are sent based on the second antenna port quantity.

In an eighteenth possible design, the state value of the first information further includes a second value; the first value indicates that the time-frequency resource occupied by the first network is within the time-frequency resource of the second network; and the second value indicates that the time-frequency resource occupied by the first network is outside the time-frequency resource of the second network or that the second network is not deployed, or the second value is a reserved state. For example, the second network is the NB-IoT network.

In other words, in addition to indicating the antenna port quantity of the second network, the first information further indicates the position relationship between the time-frequency resource of the first network and the time-frequency resource of the second network, so that the first apparatus learns whether to avoid the time-frequency resource occupied by the reference signal of the second network.

In a nineteenth possible design, an antenna port of the second network is an antenna port of a narrowband reference signal NRS; and the available resource of the first network does not include a time domain symbol occupied by the NRS, or the unavailable resource of the first network includes a time domain symbol occupied by the NRS. For example, the second network is the NB-IoT network.

The first apparatus does not support non-coherent demodulation. Correspondingly, the first apparatus cannot perform information demodulation at a resource element RE granularity. In this case, the first apparatus can also determine the available resource or the unavailable resource of the first network based on the time domain symbol occupied by the NRS.

In a twentieth possible design, a time domain resource occupied by the first information is included in a third resource set, and the third resource set includes a time domain symbol identified by at least one of the following indexes: 0, 1, 2, 3, 4, 7, 8, 9, 10, and 11.

In other words, the third resource set includes the available resource of the first network, and the NRS of the second network may occupy time domain symbols identified by the following indexes: 5, 6, 12, and 13. Therefore, to avoid the NRS of the second network, the third resource set does not include a time domain resource occupied by the NRS of the second network.

In a twenty-first possible design, the third resource set is further for transmission of a data signal of the first network and/or a control signal of the first network.

In the first aspect, the first possible design and the second possible design of the first aspect are applicable to that the second network is the LTE network or the NB-IoT network. The third possible design to the fourteenth possible design of the first aspect are applicable to that the second network is the LTE network. The fifteenth possible design to the twenty-first possible design of the first aspect are applicable to that the second network is the NB-IoT network.

According to a second aspect, a resource indication method is provided. An execution body of the method may be a first apparatus. The first apparatus may be a terminal device, may be a component (for example, a processor, a chip, or a chip system) used in the terminal device, or may be a logical module or software that can implement all or some functions of the terminal device. The following provides descriptions by using an example in which the execution body is the first apparatus. The method includes: receiving first information; and determining an available resource or an unavailable resource of a first network based on the first information.

In other words, the first apparatus can receive the first information, and determine the available resource or the unavailable resource of the first network based on the first information. In this way, even if the first network is an ambient internet of things A-IoT network, and the first network and another network are jointly deployed, the first apparatus can learn of an available resource or an unavailable resource of the A-IoT network, and this helps improve system communication performance.

In a first possible design, the first information indicates that a time-frequency resource occupied by the first network is within a time-frequency resource of a second network and within a time-frequency resource of a third network; the first information indicates that a time-frequency resource occupied by the first network is within a time-frequency resource of a second network and outside a time-frequency resource of a third network; the first information indicates that a time-frequency resource occupied by the first network is outside a time-frequency resource of a second network and within a time-frequency resource of a third network; or the first information indicates that a time-frequency resource occupied by the first network is outside a time-frequency resource of a second network and outside a time-frequency resource of a third network.

For example, the first network is the ambient internet of things A-IoT network, the second network is a long term evolution LTE network, and the third network is a narrowband internet of things NB-IoT network.

For another example, the first network is the A-IoT network, the second network is an NB-IoT network, and the third network is an LTE network.

In other words, the first information indicates a position relationship between the time-frequency resource of the first network and the time-frequency resources of the second network and the third network, so that the first apparatus learns whether to avoid the time-frequency resources occupied by the second network and the third network.

In a second possible design, that the first information indicates that the time-frequency resource occupied by the first network is within the time-frequency resource of the second network and within the time-frequency resource of the third network includes: The first information indicates that the time-frequency resource occupied by the first network is within the time-frequency resource of the second network and within the time-frequency resource of the third network in a first state. That the first information indicates that the time-frequency resource occupied by the first network is within the time-frequency resource of the second network and outside the time-frequency resource of the third network includes: The first information indicates that the time-frequency resource occupied by the first network is within the time-frequency resource of the second network and outside the time-frequency resource of the third network in a first state. That the first information indicates that the time-frequency resource occupied by the first network is outside the time-frequency resource of the second network and within the time-frequency resource of the third network includes: The first information indicates that the time-frequency resource occupied by the first network is outside the time-frequency resource of the second network and within the time-frequency resource of the third network in a first state. That the first information indicates that the time-frequency resource occupied by the first network is outside the time-frequency resource of the second network and outside the time-frequency resource of the third network includes: The first information indicates that the time-frequency resource occupied by the first network is outside the time-frequency resource of the second network and outside the time-frequency resource of the third network in a first state.

The first state includes at least one of the following: a first apparatus is in an idle state or a connected state, or the first apparatus has accessed the first network; and the method is applied to the first apparatus.

In other words, the first information further indicates the first state, so that the first apparatus learns that whether to avoid the time-frequency resources occupied by the second network and the third network is determined only in the first state.

In a third possible design, the first information indicates an antenna port quantity of the second network, and the antenna port quantity of the second network includes a first antenna port quantity, a second antenna port quantity, and a third antenna port quantity; and a state value of the first information includes a first value, a second value, a third value, and a fourth value, where the first value indicates the first antenna port quantity and/or the second antenna port quantity, and the second value indicates the first antenna port quantity and/or the second antenna port quantity; and the third value indicates the third antenna port quantity, and the fourth value indicates the third antenna port quantity. For example, the second network is the LTE network.

For the second network, different antenna port quantities correspond to respective resource mapping patterns. In this way, the first apparatus can learn, based on the antenna port quantity that is of the second network and that is indicated by the first information, of a time-frequency resource occupied by a reference signal of the second network.

In a fourth possible design, the first value indicates that the time-frequency resource occupied by the first network is within the time-frequency resource of the second network and within the time-frequency resource of the third network; the second value indicates that the time-frequency resource occupied by the first network is within the time-frequency resource of the second network and outside the time-frequency resource of the third network, or indicates that the time-frequency resource occupied by the first network is within the time-frequency resource of the second network and that the third network is not deployed; the third value indicates that the time-frequency resource occupied by the first network is within the time-frequency resource of the second network and within the time-frequency resource of the third network; and the fourth value indicates that the time-frequency resource occupied by the first network is within the time-frequency resource of the second network and outside the time-frequency resource of the third network, or indicates that the time-frequency resource occupied by the first network is within the time-frequency resource of the second network and that the third network is not deployed. For example, the second network is the LTE network.

In other words, in addition to indicating the antenna port quantity of the second network, the first information further indicates the position relationship between the time-frequency resource of the first network and the time-frequency resources of the second network and the third network, so that the first apparatus learns whether to avoid the time-frequency resource occupied by the third network in addition to avoiding the time-frequency resource occupied by the reference signal of the second network.

In a fifth possible design, the first antenna port quantity is 1, the second antenna port quantity is 2, and the third antenna port quantity is 4.

In a sixth possible design, resource mapping patterns corresponding to the first antenna port quantity and the second antenna port quantity are the same. The resource mapping pattern corresponding to the first antenna port quantity may be understood as a resource mapping pattern occupied by a cell-specific reference signal CRS when the CRS is sent based on the first antenna port quantity. The resource mapping pattern corresponding to the second antenna port quantity may be understood as a resource mapping pattern occupied by CRSs when the CRSs are sent based on the second antenna port quantity.

In a seventh possible design, an antenna port of the second network is an antenna port of a cell-specific reference signal CRS; and the available resource of the first network does not include a time domain symbol occupied by the CRS, or the unavailable resource of the first network includes a time domain symbol occupied by the CRS.

The first apparatus does not support non-coherent demodulation. Correspondingly, the first apparatus cannot perform information demodulation at a resource element RE granularity. In this case, the first apparatus can also determine the available resource or the unavailable resource of the first network based on the time domain symbol occupied by the CRS.

In an eighth possible design, the first information indicates an antenna port quantity of the third network, and the antenna port quantity of the third network includes a fourth antenna port quantity and a fifth antenna port quantity; and the state value of the first information includes a fifth value, and the fifth value indicates the fourth antenna port quantity and/or the fifth antenna port quantity. For example, the third network is the NB-IoT network.

For the third network, different antenna port quantities correspond to respective resource mapping patterns. In this way, the first apparatus can learn, based on the antenna port quantity that is of the third network and that is indicated by the first information, of a time-frequency resource occupied by a reference signal of the third network.

In a ninth possible design, the fourth antenna port quantity is 1, and the fifth antenna port quantity is 2.

In a tenth possible design, resource mapping patterns corresponding to the fourth antenna port quantity and the fifth antenna port quantity are the same. The resource mapping pattern corresponding to the fourth antenna port quantity may be understood as a resource mapping pattern occupied by a narrowband reference signal NRS when the NRS is sent based on the fourth antenna port quantity. The resource mapping pattern corresponding to the fifth antenna port quantity may be understood as a resource mapping pattern occupied by NRSs when the NRSs are sent based on the fifth antenna port quantity.

In an eleventh possible design, the state value of the first information further includes a sixth value; the fifth value indicates that the time-frequency resource occupied by the first network is outside the time-frequency resource of the second network and within the time-frequency resource of the third network, or indicates that the second network is not deployed and that the time-frequency resource occupied by the first network is within the time-frequency resource of the third network; and the sixth value indicates that the time-frequency resource occupied by the first network is outside the time-frequency resource of the second network and outside the time-frequency resource of the third network, indicates that the time-frequency resource occupied by the first network is outside the time-frequency resource of the second network and that the third network is not deployed, indicates that the second network is not deployed and that the time-frequency resource occupied by the first network is outside the time-frequency resource of the third network, or indicates that the second network is not deployed and that the third network is not deployed. For example, the third network is the NB-IoT network.

In other words, in addition to indicating the antenna port quantity of the third network, the first information further indicates the position relationship between the time-frequency resource of the first network and the time-frequency resources of the second network and the third network, so that the first apparatus learns whether to avoid the time-frequency resource occupied by the reference signal of the third network in addition to no need to avoid the time-frequency resource occupied by the second network.

In a twelfth possible design, an antenna port of the third network is an antenna port of a narrowband reference signal NRS; and the available resource of the first network does not include a time domain symbol occupied by the NRS, or the unavailable resource of the first network includes a time domain symbol occupied by the NRS. For example, the third network is the NB-IoT network.

The first apparatus does not support the non-coherent demodulation. Correspondingly, the first apparatus cannot perform information demodulation at the resource element RE granularity. In this case, the first apparatus can also determine the available resource or the unavailable resource of the first network based on the time domain symbol occupied by the NRS.

In a thirteenth possible design, the first information indicates a symbol quantity of a control channel of the second network, and the symbol quantity includes a first symbol quantity, a second symbol quantity, and a third symbol quantity; and the state value of the first information includes a seventh value, an eighth value, and a ninth value, where the seventh value indicates the first symbol quantity, the eighth value indicates the second symbol quantity, and the ninth value indicates the third symbol quantity. For example, the second network is the LTE network.

For the second network, the control channel of the second network may occupy different quantities of symbols. In this way, the first apparatus can learn, based on the symbol quantity of the control channel of the second network, of a time domain resource occupied by the control channel of the second network.

In a fourteenth possible design, the state value of the first information further includes a tenth value; the seventh value indicates that the time-frequency resource occupied by the first network is within the time-frequency resource of the second network; the eighth value indicates that the time-frequency resource occupied by the first network is within the time-frequency resource of the second network; the ninth value indicates that the time-frequency resource occupied by the first network is within the time-frequency resource of the second network; and the tenth value indicates that the time-frequency resource occupied by the first network is outside the time-frequency resource of the second network or that the second network is not deployed, or the tenth value is a reserved state. For example, the second network is the LTE network.

In other words, in addition to indicating the symbol quantity of the control channel of the second network, the first information further indicates the position relationship between the time-frequency resource of the first network and the time-frequency resource of the second network, so that the first apparatus learns whether to avoid a time-frequency resource occupied by the control channel of the second network.

In a fifteenth possible design, the available resource of the first network does not include a time domain symbol occupied by the control channel; or the unavailable resource of the first network includes a time domain symbol occupied by the control channel.

In a sixteenth possible design, when the state value of the first information includes the first value, the second value, the third value, the fourth value, the fifth value, the seventh value, the eighth value, or the ninth value, the first network and the second network are jointly deployed or coexist. For example, the second network is the LTE network.

In a seventeenth possible design, a time domain resource occupied by the first information is included in a second resource set, and the second resource set includes a time domain symbol identified by at least one of the following indexes: 3, 9, and 10.

In other words, the second resource set includes the available resource of the first network; and the CRS of the second network may occupy time domain symbols identified by the following indexes: 0, 4, 7, and 11, or the CRS of the second network may occupy time domain symbols identified by the following indexes: 0, 1, 4, 7, 8, and 11. The NRS of the third network may occupy time domain symbols identified by the following indexes: 5, 6, 12, and 13. Therefore, to avoid the CRS of the second network and the NRS of the third network, the second resource set does not include time domain resources occupied by the CRS of the second network and the NRS of the third network.

In an eighteenth possible design, the second resource set further includes a time domain symbol identified by a second index; and the second index includes 0, 1, and 2, the second index includes 1 and 2, or the second index includes 2.

The control channel of the second network occupies a time domain symbol identified by the following index: 0, the control channel of the second network occupies time domain symbols identified by the following indexes: 0 and 1, the control channel of the second network occupies time domain symbols identified by the following indexes: 0, 1, and 2, or the control channel of the second network occupies a time domain symbol other than time domain symbols identified by the following indexes: 0, 1, and 2. Therefore, to avoid the control channel of the second network, the second resource set does not include the time domain resource occupied by the control channel of the second network.

In a nineteenth possible design, the second resource set is further for transmission of a data signal of the first network and/or a control signal of the first network.

In the second aspect, the first possible design and the second possible design of the second aspect are applicable to that the second network is the LTE network and that the third network is the NB-IoT network, or are applicable to that the second network is the NB-IoT network and that the third network is the LTE network. The third possible design to the nineteenth possible design of the second aspect are applicable to that the second network is the LTE network and that the third network is the NB-IoT network.

With reference to the first aspect or the second aspect, in a possible design, the first information is carried on a broadcast channel. In other words, the first information is received through the broadcast channel.

With reference to the first aspect or the second aspect, in a possible design, the method is applied to the first apparatus, and the first apparatus is served by the first network.

With reference to the first aspect or the second aspect, in a possible design, the method is applied to the first apparatus, and the first apparatus satisfies at least one of the following: supporting the non-coherent demodulation; supporting envelope detection; supporting amplitude modulation ASK; supporting frequency modulation FSK; supporting a non-orthogonal frequency division multiplexing OFDM receiver structure; not supporting OFDM receiving and demodulation; or not supporting in-phase/quadrature IQ demodulation.

In other words, the first apparatus cannot perform information demodulation at the RE granularity.

With reference to the first aspect or the second aspect, in a possible design, the method further includes: receiving second information, where the second information indicates a first resource and/or a second resource, the first resource is consecutive in frequency domain, the first resource is used by the first apparatus to access the first network, the second resource is consecutive in frequency domain, and the second resource is used by the first apparatus to synchronize with the first network.

In other words, if the second information indicates the first resource, it means that the first resource consecutive in frequency domain is allocated to the first apparatus, to perform an access process on the first resource. This helps reduce a probability that the access process is interrupted and reduce an access delay.

If the second information indicates the second resource, it means that the second resource consecutive in frequency domain is allocated to the first apparatus, to receive a synchronization signal on the second resource, and complete synchronization with the first network. This helps reduce a probability that a synchronization process is interrupted and reduce a synchronization delay.

With reference to the first aspect or the second aspect, in a possible design, the first resource is consecutive in time domain. Because the first resource is consecutive in time domain, impact of another network on information transmission on the first resource can also be avoided. This helps further reduce the probability that the access process is interrupted and reduce the access delay.

With reference to the first aspect or the second aspect, in a possible design, the second resource is consecutive in time domain. Because the second resource is consecutive in time domain, impact of another network on information transmission on the second resource can also be avoided. This helps further reduce the probability that the synchronization process is interrupted and reduce the synchronization delay.

With reference to the first aspect or the second aspect, in a possible design, the first information occupies at least one subframe. In other words, a resource consecutive in time domain is allocated to the first apparatus.

In this way, a resource for transmission of the first information is not occupied by the another network, for example, is not occupied by the LTE network, the NB-IoT network, and a new radio NR network, to effectively avoid interference of a broadcast channel, a data channel, and a control channel in the foregoing networks (namely, the LTE network, the NB-IoT network, and the NR network) to the first information, and help ensure transmission performance of the first information.

With reference to the first aspect or the second aspect, in a possible design, the first information occupies at least one radio frame. In other words, a resource consecutive in time domain is allocated to the first apparatus.

In this way, a resource for transmission of the first information is not occupied by the another network, for example, is not occupied by the LTE network, the NB-IoT network, and an NR network, to effectively avoid interference of a broadcast channel, a data channel, and a control channel in the foregoing networks (namely, the LTE network, the NB-IoT network, and the NR network) to the first information, and help ensure transmission performance of the first information.

With reference to the first aspect or the second aspect, in a possible design, when the first apparatus receives the first information, the time-frequency resource occupied by the first network is outside the time-frequency resource of the second network.

In other words, when the first apparatus receives the first information, the deployment of the first network and the second network is non-in-band deployment, to effectively avoid interference of a broadcast channel, a data channel, and a control channel in the second network to the first information, and help ensure transmission performance of the first information.

According to a third aspect, a resource indication method is provided. An execution body of the method may be a second apparatus. The second apparatus may be a network device, may be a component (for example, a processor, a chip, or a chip system) used in the network device, or may be a logical module or software that can implement all or some functions of the network device. The following provides descriptions by using an example in which the execution body is the second apparatus. The method includes: sending first information, where the first information indicates an available resource or an unavailable resource of a first network. The second apparatus is a communication apparatus of the first network.

For example, the first network is an ambient internet of things A-IoT network.

According to a fourth aspect, a resource indication method is provided. An execution body of the method may be a third apparatus. The third apparatus may be a network device, may be a component (for example, a processor, a chip, or a chip system) used in the network device, or may be a logical module or software that can implement all or some functions of the network device. The following provides descriptions by using an example in which the execution body is the third apparatus. The method includes: sending first information, where the first information indicates an available resource or an unavailable resource of a first network. The third apparatus is a communication apparatus of a second network, the first network and the second network are jointly deployed, and the first network and a third network are not jointly deployed.

For example, the first network is an ambient internet of things A-IoT network, the second network is a long term evolution LTE network, and the third network is a narrowband internet of things NB-IoT network.

For another example, the first network is an ambient internet of things A-IoT network, the second network is an NB-IoT network, and the third network is an LTE network.

According to a fifth aspect, a resource indication method is provided. An execution body of the method may be a fourth apparatus. The fourth apparatus may be a network device, may be a component (for example, a processor, a chip, or a chip system) used in the network device, or may be a logical module or software that can implement all or some functions of the network device. The following provides descriptions by using an example in which the execution body is the fourth apparatus. The method includes: sending first information, where the first information indicates an available resource or an unavailable resource of a first network. The fourth apparatus is a communication apparatus of a third network, and the first network, a second network, and the third network are jointly deployed.

For example, the first network is an ambient internet of things A-IoT network, the second network is a long term evolution LTE network, and the third network is a narrowband internet of things NB-IoT network.

For another example, the first network is an ambient internet of things A-IoT network, the second network is an NB-IoT network, and the third network is an LTE network.

With reference to the third aspect, the fourth aspect, or the fifth aspect, in a possible design, the method further includes: determining the first information.

With reference to the third aspect, the fourth aspect, or the fifth aspect, in a possible design, before sending the first information, the method further includes: generating a broadcast channel; and the sending the first information includes: sending the first information through the broadcast channel.

With reference to the third aspect or the fourth aspect, in a possible design, the first information indicates that a time-frequency resource occupied by the first network is within a time-frequency resource of a second network; or the first information indicates that a time-frequency resource occupied by the first network is outside a time-frequency resource of a second network.

For example, the first network is the A-IoT network, and the second network is the long term evolution LTE network.

For another example, the first network is the A-IoT network, and the second network is the narrowband internet of things NB-IoT network.

With reference to the third aspect or the fourth aspect, in a possible design, that the first information indicates that the time-frequency resource occupied by the first network is within the time-frequency resource of the second network includes: The first information indicates that the time-frequency resource occupied by the first network is within the time-frequency resource of the second network in a first state. Alternatively, that the first information indicates that the time-frequency resource occupied by the first network is outside the time-frequency resource of the second network includes: The first information indicates that the time-frequency resource occupied by the first network is outside the time-frequency resource of the second network in a first state.

The first state includes at least one of the following: a first apparatus is in an idle state or a connected state, or the first apparatus has accessed the first network; and the method is applied to the first apparatus.

With reference to the third aspect or the fourth aspect, in a possible design, the first information indicates an antenna port quantity of the second network, and the antenna port quantity of the second network includes a first antenna port quantity, a second antenna port quantity, and a third antenna port quantity; and a state value of the first information includes a first value and a second value, where the first value indicates the first antenna port quantity and/or the second antenna port quantity, and the second value indicates the third antenna port quantity. For example, the second network is the LTE network.

With reference to the third aspect or the fourth aspect, in a possible design, the first antenna port quantity is 1, the second antenna port quantity is 2, and the third antenna port quantity is 4. This design is applicable to that the second network is the LTE network.

With reference to the third aspect or the fourth aspect, in a possible design, resource mapping patterns corresponding to the first antenna port quantity and the second antenna port quantity are the same. This design is applicable to that the second network is the LTE network.

With reference to the third aspect or the fourth aspect, in a possible design, the state value of the first information further includes a third value; the first value indicates that the time-frequency resource occupied by the first network is within the time-frequency resource of the second network; the second value indicates that the time-frequency resource occupied by the first network is within the time-frequency resource of the second network; and the third value indicates that the time-frequency resource occupied by the first network is outside the time-frequency resource of the second network or that the second network is not deployed, or the third value is a reserved state. For example, the second network is the LTE network.

With reference to the third aspect or the fourth aspect, in a possible design, an antenna port of the second network is an antenna port of a cell-specific reference signal CRS; and the available resource of the first network does not include a time domain symbol occupied by the CRS, or the unavailable resource of the first network includes a time domain symbol occupied by the CRS. For example, the second network is the LTE network.

With reference to the third aspect or the fourth aspect, in a possible design, the first information indicates a symbol quantity of a control channel of the second network, and the symbol quantity includes a first symbol quantity, a second symbol quantity, and a third symbol quantity; and the state value of the first information includes a fourth value, a fifth value, and a sixth value, where the fourth value indicates the first symbol quantity, the fifth value indicates the second symbol quantity, and the sixth value indicates the third symbol quantity. For example, the second network is the LTE network.

With reference to the third aspect or the fourth aspect, in a possible design, the state value of the first information further includes a seventh value; the fourth value indicates that the time-frequency resource occupied by the first network is within the time-frequency resource of the second network; the fifth value indicates that the time-frequency resource occupied by the first network is within the time-frequency resource of the second network; the sixth value indicates that the time-frequency resource occupied by the first network is within the time-frequency resource of the second network; and the seventh value indicates that the time-frequency resource occupied by the first network is outside the time-frequency resource of the second network or that the second network is not deployed, or the seventh value is the reserved state. For example, the second network is the LTE network.

With reference to the third aspect or the fourth aspect, in a possible design, the available resource of the first network does not include a time domain symbol occupied by the control channel of the second network; or the unavailable resource of the first network includes a time domain symbol occupied by the control channel of the second network. For example, the second network is the LTE network.

With reference to the third aspect or the fourth aspect, in a possible design, when the state value of the first information includes the first value, the second value, the fourth value, the fifth value, or the sixth value, the first network and the second network are jointly deployed or coexist. For example, the second network is the LTE network.

With reference to the third aspect or the fourth aspect, in a possible design, a time domain resource occupied by the first information is included in a first resource set, and the first resource set includes a time domain symbol identified by at least one of the following indexes: 3, 5, 6, 9, 10, 12, and 13. This design is applicable to that the second network is the LTE network.

With reference to the third aspect or the fourth aspect, in a possible design, the first resource set further includes a time domain symbol identified by a first index; and the first index includes 0, 1, and 2, the first index includes 1 and 2, or the first index includes 2. This design is applicable to that the second network is the LTE network.

With reference to the third aspect or the fourth aspect, in a possible design, the first resource set is further for transmission of a data signal of the first network and/or a control signal of the first network. This design is applicable to that the second network is the LTE network.

With reference to the third aspect or the fourth aspect, in a possible design, the first information indicates an antenna port quantity of the second network, and the antenna port quantity of the second network includes a first antenna port quantity and a second antenna port quantity; and a state value of the first information includes a first value, where the first value indicates the first antenna port quantity and/or the second antenna port quantity. For example, the second network is the NB-IoT network.

With reference to the third aspect or the fourth aspect, in a possible design, the first antenna port quantity is 1, and the second antenna port quantity is 2. This design is applicable to that the second network is the NB-IoT network.

With reference to the third aspect or the fourth aspect, in a possible design, resource mapping patterns corresponding to the first antenna port quantity and the second antenna port quantity are the same. This design is applicable to that the second network is the NB-IoT network.

With reference to the third aspect or the fourth aspect, in a possible design, the state value of the first information further includes a second value; the first value indicates that the time-frequency resource occupied by the first network is within the time-frequency resource of the second network; and the second value indicates that the time-frequency resource occupied by the first network is outside the time-frequency resource of the second network or that the second network is not deployed, or the second value is a reserved state. For example, the second network is the NB-IoT network.

With reference to the third aspect or the fourth aspect, in a possible design, an antenna port of the second network is an antenna port of a narrowband reference signal NRS; and the available resource of the first network does not include a time domain symbol occupied by the NRS, or the unavailable resource of the first network includes a time domain symbol occupied by the NRS. For example, the second network is the NB-IoT network.

With reference to the third aspect or the fourth aspect, in a possible design, a time domain resource occupied by the first information is included in a third resource set, and the third resource set includes a time domain symbol identified by at least one of the following indexes: 0, 1, 2, 3, 4, 7, 8, 9, 10, and 11. This design is applicable to that the second network is the NB-IoT network.

With reference to the third aspect or the fourth aspect, in a possible design, the third resource set is further for transmission of a data signal of the first network and/or a control signal of the first network. This design is applicable to that the second network is the NB-IoT network.

With reference to the third aspect or the fifth aspect, in a possible design, the first information indicates that a time-frequency resource occupied by the first network is within a time-frequency resource of a second network and within a time-frequency resource of a third network; the first information indicates that a time-frequency resource occupied by the first network is within a time-frequency resource of a second network and outside a time-frequency resource of a third network; the first information indicates that a time-frequency resource occupied by the first network is outside a time-frequency resource of a second network and within a time-frequency resource of a third network; or the first information indicates that a time-frequency resource occupied by the first network is outside a time-frequency resource of a second network and outside a time-frequency resource of a third network.

For example, the first network is the A-IoT network, the second network is the LTE network, and the third network is the NB-IoT network.

For another example, the first network is the A-IoT network, the second network is the NB-IoT network, and the third network is the LTE network.

With reference to the third aspect or the fifth aspect, in a possible design, that the first information indicates that the time-frequency resource occupied by the first network is within the time-frequency resource of the second network and within the time-frequency resource of the third network includes: The first information indicates that the time-frequency resource occupied by the first network is within the time-frequency resource of the second network and within the time-frequency resource of the third network in a first state. That the first information indicates that the time-frequency resource occupied by the first network is within the time-frequency resource of the second network and outside the time-frequency resource of the third network includes: The first information indicates that the time-frequency resource occupied by the first network is within the time-frequency resource of the second network and outside the time-frequency resource of the third network in a first state. That the first information indicates that the time-frequency resource occupied by the first network is outside the time-frequency resource of the second network and within the time-frequency resource of the third network includes: The first information indicates that the time-frequency resource occupied by the first network is outside the time-frequency resource of the second network and within the time-frequency resource of the third network in a first state. That the first information indicates that the time-frequency resource occupied by the first network is outside the time-frequency resource of the second network and outside the time-frequency resource of the third network includes: The first information indicates that the time-frequency resource occupied by the first network is outside the time-frequency resource of the second network and outside the time-frequency resource of the third network in a first state.

The first state includes at least one of the following: a first apparatus is in an idle state or a connected state, or the first apparatus has accessed the first network; and the method is applied to the first apparatus.

With reference to the third aspect or the fifth aspect, in a possible design, the first information indicates an antenna port quantity of the second network, and the antenna port quantity of the second network includes a first antenna port quantity, a second antenna port quantity, and a third antenna port quantity; and a state value of the first information includes a first value, a second value, a third value, and a fourth value, where the first value indicates the first antenna port quantity and/or the second antenna port quantity, and the second value indicates the first antenna port quantity and/or the second antenna port quantity; and the third value indicates the third antenna port quantity, and the fourth value indicates the third antenna port quantity. For example, the second network is the LTE network.

With reference to the third aspect or the fifth aspect, in a possible design, the first value indicates that the time-frequency resource occupied by the first network is within the time-frequency resource of the second network and within the time-frequency resource of the third network; the second value indicates that the time-frequency resource occupied by the first network is within the time-frequency resource of the second network and outside the time-frequency resource of the third network, or indicates that the time-frequency resource occupied by the first network is within the time-frequency resource of the second network and that the third network is not deployed; the third value indicates that the time-frequency resource occupied by the first network is within the time-frequency resource of the second network and within the time-frequency resource of the third network; and the fourth value indicates that the time-frequency resource occupied by the first network is within the time-frequency resource of the second network and outside the time-frequency resource of the third network, or indicates that the time-frequency resource occupied by the first network is within the time-frequency resource of the second network and that the third network is not deployed. For example, the second network is the LTE network, and the third network is the NB-IoT network.

With reference to the third aspect or the fifth aspect, in a possible design, the first antenna port quantity is 1, the second antenna port quantity is 2, and the third antenna port quantity is 4. This design is applicable to that the second network is the LTE network.

With reference to the third aspect or the fifth aspect, in a possible design, resource mapping patterns corresponding to the first antenna port quantity and the second antenna port quantity are the same. This design is applicable to that the second network is the LTE network.

With reference to the third aspect or the fifth aspect, in a possible design, an antenna port of the second network is an antenna port of a cell-specific reference signal CRS; and the available resource of the first network does not include a time domain symbol occupied by the CRS, or the unavailable resource of the first network includes a time domain symbol occupied by the CRS. For example, the second network is the LTE network.

With reference to the third aspect or the fifth aspect, in a possible design, the first information indicates an antenna port quantity of the third network, and the antenna port quantity of the third network includes a fourth antenna port quantity and a fifth antenna port quantity; and the state value of the first information includes a fifth value, and the fifth value indicates the fourth antenna port quantity and/or the fifth antenna port quantity. For example, the third network is the NB-IoT network.

With reference to the third aspect or the fifth aspect, in a possible design, the fourth antenna port quantity is 1, and the fifth antenna port quantity is 2. This design is applicable to that the third network is the NB-IoT network.

With reference to the third aspect or the fifth aspect, in a possible design, resource mapping patterns corresponding to the fourth antenna port quantity and the fifth antenna port quantity are the same. The resource mapping pattern corresponding to the fourth antenna port quantity may be understood as a resource mapping pattern occupied by a narrowband reference signal NRS when the NRS is sent based on the fourth antenna port quantity. The resource mapping pattern corresponding to the fifth antenna port quantity may be understood as a resource mapping pattern occupied by NRSs when the NRSs are sent based on the fifth antenna port quantity. This design is applicable to that the third network is the NB-IoT network.

With reference to the third aspect or the fifth aspect, in a possible design, the state value of the first information further includes a sixth value; the fifth value indicates that the time-frequency resource occupied by the first network is outside the time-frequency resource of the second network and within the time-frequency resource of the third network, or indicates that the second network is not deployed and that the time-frequency resource occupied by the first network is within the time-frequency resource of the third network; and the sixth value indicates that the time-frequency resource occupied by the first network is outside the time-frequency resource of the second network and outside the time-frequency resource of the third network, indicates that the time-frequency resource occupied by the first network is outside the time-frequency resource of the second network and that the third network is not deployed, indicates that the second network is not deployed and that the time-frequency resource occupied by the first network is outside the time-frequency resource of the third network, or indicates that the second network is not deployed and that the third network is not deployed. For example, the second network is the LTE network, and the third network is the NB-IoT network.

With reference to the third aspect or the fifth aspect, in a possible design, an antenna port of the third network is an antenna port of a narrowband reference signal NRS; and the available resource of the first network does not include a time domain symbol occupied by the NRS, or the unavailable resource of the first network includes a time domain symbol occupied by the NRS. For example, the third network is the NB-IoT network.

With reference to the third aspect or the fifth aspect, in a possible design, the first information indicates a symbol quantity of a control channel of the second network, and the symbol quantity includes a first symbol quantity, a second symbol quantity, and a third symbol quantity; and the state value of the first information includes a seventh value, an eighth value, and a ninth value, where the seventh value indicates the first symbol quantity, the eighth value indicates the second symbol quantity, and the ninth value indicates the third symbol quantity. For example, the second network is the LTE network.

With reference to the third aspect or the fifth aspect, in a possible design, the state value of the first information further includes a tenth value; the seventh value indicates that the time-frequency resource occupied by the first network is within the time-frequency resource of the second network; the eighth value indicates that the time-frequency resource occupied by the first network is within the time-frequency resource of the second network; the ninth value indicates that the time-frequency resource occupied by the first network is within the time-frequency resource of the second network; and the tenth value indicates that the time-frequency resource occupied by the first network is outside the time-frequency resource of the second network or that the second network is not deployed, or the tenth value is a reserved state. For example, the second network is the LTE network.

With reference to the third aspect or the fifth aspect, in a possible design, the available resource of the first network does not include a time domain symbol occupied by the control channel of the second network; or the unavailable resource of the first network includes a time domain symbol occupied by the control channel of the second network. For example, the second network is the LTE network.

With reference to the third aspect or the fifth aspect, in a possible design, when the state value of the first information includes the first value, the second value, the third value, the fourth value, the fifth value, the seventh value, the eighth value, or the ninth value, the first network and the second network are jointly deployed or coexist. For example, the second network is the LTE network.

With reference to the third aspect or the fifth aspect, in a possible design, a time domain resource occupied by the first information is included in a second resource set, and the second resource set includes a time domain symbol identified by at least one of the following indexes: 3, 9, and 10. This design is applicable to that the second network is the LTE network and that the third network is the NB-IoT network.

With reference to the third aspect or the fifth aspect, in a possible design, the second resource set further includes a time domain symbol identified by a second index; and the second index includes 0, 1, and 2, the second index includes 1 and 2, or the second index includes 2. This design is applicable to that the second network is the LTE network and that the third network is the NB-IoT network.

With reference to the third aspect or the fifth aspect, in a possible design, the second resource set is further for transmission of a data signal of the first network and/or a control signal of the first network. This design is applicable to that the second network is the LTE network and that the third network is the NB-IoT network.

With reference to the third aspect, the fourth aspect, or the fifth aspect, in a possible design, the first information is carried on a broadcast channel. In other words, the first information is received through the broadcast channel.

With reference to the third aspect, the fourth aspect, or the fifth aspect, in a possible design, the method further includes: sending second information, where the second information indicates a first resource and/or a second resource, the first resource is consecutive in frequency domain, the first resource is used by the first apparatus to access the first network, the second resource is consecutive in frequency domain, and the second resource is used by the first apparatus to synchronize with the first network.

With reference to the third aspect, the fourth aspect, or the fifth aspect, in a possible design, the first resource is consecutive in time domain.

With reference to the third aspect, the fourth aspect, or the fifth aspect, in a possible design, the second resource is consecutive in time domain.

With reference to the third aspect, the fourth aspect, or the fifth aspect, in a possible design, the first information occupies at least one subframe.

With reference to the third aspect, the fourth aspect, or the fifth aspect, in a possible design, the first information occupies at least one radio frame.

With reference to the third aspect, the fourth aspect, or the fifth aspect, in a possible design, when the first information is sent, the time-frequency resource occupied by the first network is outside the time-frequency resource of the second network.

For technical effects brought by any design manner of the third aspect to the fifth aspect, refer to the technical effects brought by different design manners of the first aspect and the second aspect. Details are not described herein again.

According to a sixth aspect, a communication apparatus is provided, configured to implement the foregoing methods. The communication apparatus includes a corresponding module, unit, or means (means) for implementing the methods. The module, the unit, or the means may be implemented by using hardware or software, or by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation thereof. The transceiver module may also be referred to as a transceiver unit, and is configured to implement a sending function and/or a receiving function in any one of the foregoing aspects and any possible implementation thereof. The transceiver module may include a transceiver circuit, a transceiver, or a communication interface.

In some possible designs, the transceiver module includes a sending module and/or a receiving module, respectively configured to implement the sending function or the receiving function in any one of the foregoing aspects and any possible implementation thereof.

According to a seventh aspect, a communication apparatus is provided, and includes a processor and a memory. The processor is coupled to the memory. The memory stores program instructions. When the program instructions stored in the memory are executed by the processor, the communication apparatus is enabled to perform the method according to any one of the foregoing aspects or any possible design of any one of the foregoing aspects.

According to an eighth aspect, a communication apparatus is provided, and includes a processor. The processor is configured to execute a computer program or instructions, to enable the communication apparatus to perform the method according to any one of the foregoing aspects. Optionally, the communication apparatus further includes a memory. The memory may be coupled to the processor. Alternatively, the memory may be independent of the processor. For example, the memory and the processor are two independent modules. The memory may be outside the communication apparatus, or may be inside the communication apparatus.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the aspects.

According to a tenth aspect, a computer program product including instructions is provided. When the computer program product runs on a communication apparatus, the communication apparatus is enabled to perform the method according to any one of the aspects.

The communication apparatus provided in any one of the sixth aspect to the tenth aspect may be the first apparatus in the first aspect or the second aspect, for example, the chip or the chip system; the communication apparatus may be the second apparatus in the third aspect, for example, the chip or the chip system; the communication apparatus may be the third apparatus in the fourth aspect, for example, the chip or the chip system; or the communication apparatus may be the fourth apparatus in the fifth aspect, for example, the chip or the chip system. When the apparatus is the chip system, the apparatus may include a chip, or may include the chip and another discrete device.

It may be understood that, when the communication apparatus provided in any one of the sixth aspect to the tenth aspect is the chip, a sending action/function of the communication apparatus may be understood as outputting information, and a receiving action/function of the communication apparatus may be understood as inputting information.

For technical effects brought by any design manner of the sixth aspect to the tenth aspect, refer to the technical effects brought by different design manners of the first aspect to the fifth aspect. Details are not described herein again.

According to an eleventh aspect, a communication system is provided. The communication system includes at least one of a third apparatus and a fourth apparatus, and a second apparatus. The second apparatus, the third apparatus, or the fourth apparatus is configured to perform the method according to any one of an aspect or possible designs of the aspect. For example, the second apparatus is configured to perform the method according to any one of the third aspect or the possible designs of the third aspect. Alternatively, the third apparatus is configured to perform the method according to any one of the fourth aspect or the possible designs of the fourth aspect. Alternatively, the third apparatus is configured to perform the method according to any one of the fifth aspect or the possible designs of the fifth aspect.

A first network and a second network are jointly deployed or coexist, and/or a first network and a third network are jointly deployed or coexist. The second apparatus is a communication apparatus of the first network, the third apparatus is a communication apparatus of the second network, and the fourth apparatus is a communication apparatus of the third network.

In some possible designs, the communication system further includes a first apparatus.

For example, the second apparatus is configured to perform the method according to any one of the third aspect or the possible designs of the third aspect, and the first apparatus is configured to perform the method according to any one of the first aspect or the possible designs of the first aspect, or perform the method according to any one of the second aspect or the possible designs of the second aspect.

For another example, the third apparatus is configured to perform the method according to any one of the fourth aspect or the possible designs of the fourth aspect, and the first apparatus is configured to perform the method according to any one of the first aspect or the possible designs of the first aspect.

For still another example, the third apparatus is configured to perform the method according to any one of the fifth aspect or the possible designs of the fifth aspect, and the first apparatus is configured to perform the method according to any one of the second aspect or the possible designs of the second aspect.

### BRIEF DESCRIPTION OF DRAWINGS

FIG. 1a is a diagram of an architecture of a communication system according to an embodiment of this application;
FIG. 1b is a diagram of an architecture of another communication system according to an embodiment of this application;
FIG. 2 is a diagram of an architecture of still another communication system according to an embodiment of this application;
FIG. 3 is a diagram of an architecture of still another communication system according to an embodiment of this application;
FIG. 4 is a diagram of signal modulation according to an embodiment of this application;
FIG. 5 is a diagram of non-coherent demodulation according to an embodiment of this application;
FIG. 6 is a diagram of in-band deployment according to an embodiment of this application;
FIG. 7 is a diagram of guardband deployment according to an embodiment of this application;
FIG. 8 is a diagram of standalone deployment according to an embodiment of this application;
FIG. 9 is a diagram of reference signal resource mapping according to an embodiment of this application;
FIG. 10 is another diagram of reference signal resource mapping according to an embodiment of this application;
FIG. 11 is still another diagram of reference signal resource mapping according to an embodiment of this application;
FIG. 12 is still another diagram of reference signal resource mapping according to an embodiment of this application;
FIG. 13 is still another diagram of reference signal resource mapping according to an embodiment of this application;
FIG. 14 is a schematic flowchart of a communication method according to an embodiment of this application;
FIG. 15 is a schematic flowchart of another communication method according to an embodiment of this application;
FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of still another communication apparatus according to an embodiment of this application.

### DESCRIPTION OF EMBODIMENTS

The following describes technical solutions in this application with reference to accompanying drawings.

The terms "system" and "network" may be interchangeable in this application. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may further be used.

In addition, in embodiments of this application, terms such as "example" and "for example" are for representing giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences between the terms are not emphasized.

The network architecture and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of the new service scenario, the technical solutions provided in embodiments of this application are also applicable to similar technical problems.

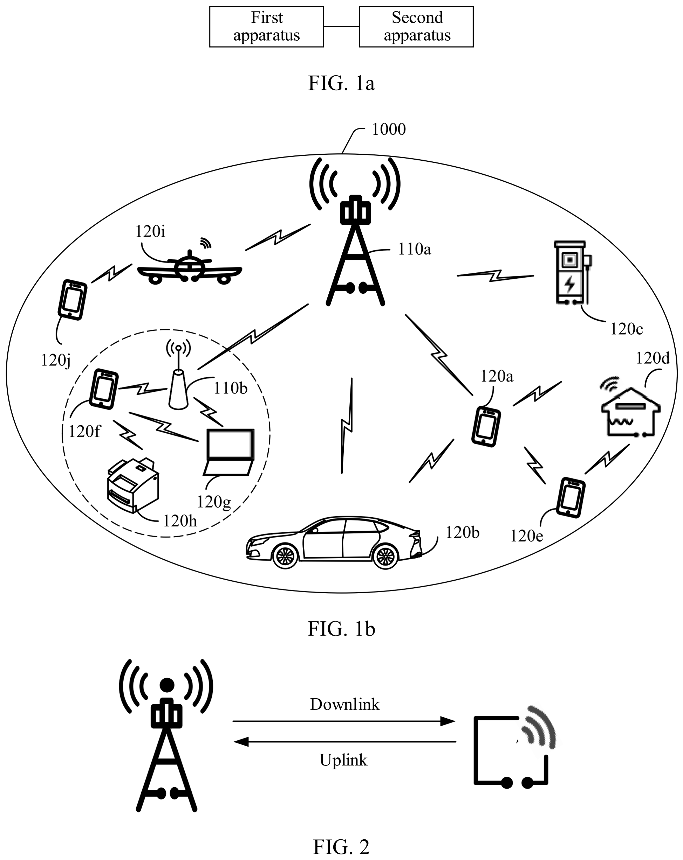

FIG. 1a is a diagram of an architecture of a communication system to which an embodiment of this application is applied. As shown in FIG. 1a, the communication system includes a first apparatus and a second apparatus. The first apparatus and the second apparatus may communicate with each other. For example, the first apparatus may be a terminal device in FIG. 1b, and the second apparatus may be a network device in FIG. 1b. Alternatively, the first apparatus may be a network device in FIG. 1b, and the second apparatus may be a terminal device in FIG. 1b.

FIG. 1b is a diagram of an architecture of a communication system 1000 to which an embodiment of this application is applied. As shown in FIG. 1b, the communication system 1000 includes at least one network device (for example, 110a and 110b in FIG. 1b) and at least one terminal device (for example, 120a to 120j in FIG. 1b). The terminal device may communicate with the network device in a wireless manner. Optionally, different network devices may communicate with each other. Optionally, different terminal devices may communicate with each other.

It should be noted that FIG. 1b is merely a diagram. Although not shown, the communication system 1000 may further include another network device. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different physical devices independent of each other, functions of the core network device and logical functions of the network device may be integrated into a same physical device, or some functions of the core network device and some functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open radio access network (open RAN, O-RAN, or ORAN), a cloud radio access network (cloud radio access network, CRAN), or a communication network of the foregoing two or more networks. The RAN device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, or an access node in a wireless fidelity (wireless fidelity, Wi-Fi) system, a long range radio (long range radio, LoRa) system, or a vehicle-to-everything system. The RAN device may alternatively be a module or a unit that completes some functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any unit in the CU (or the CU-CP or the CU-UP), the DU, and the RU in this application may be implemented by using a software module, a hardware module, or a combination of the software module and the hardware module. The radio access network device may be a macro base station (for example, 110a in FIG. 1b), may be a micro base station or an indoor base station (for example, 110b in FIG. 1b), or may be a relay node, a donor node, or the like. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network via the network device. The terminal device includes a device that provides a voice and/or data connectivity for a user. Specifically, the terminal device includes a device that provides the voice for the user, includes a device that provides the data connectivity for the user, or includes a device that provides the voice and the data connectivity for the user. For example, the terminal device may include a handheld device having a wireless connection function or a processing device connected to a wireless modem. The terminal device may communicate with the core network through the radio access network, exchange speech or data with the RAN, or exchange the speech and the data with the RAN. The terminal device may include user equipment (user equipment, UE), a wireless terminal device, a mobile terminal device, a D2D terminal device, a V2X terminal device, a machine-to-machine/machine type communication (machine-to-machine/machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (which is also referred to as a "cellular" phone), a computer with a mobile terminal device, or a portable, pocket-sized, handheld, or computer built-in mobile apparatus, for example, a device like a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a limited device, for example, a device having low power consumption, a device having a limited storage capability, or a device having a limited computing capability. For example, the terminal device includes an information sensing device like a barcode, radio frequency identification (radio frequency identification, RFID), a sensor, a global positioning system (global positioning system, GPS), or a laser scanner.

If the various terminal devices described above are located in a vehicle (for example, placed in the vehicle or mounted in the vehicle), the terminal devices may be considered as vehicle-mounted terminal devices. For example, the vehicle-mounted terminal devices are also referred to as on board units (on board units, OBUs).

In embodiments of this application, the terminal device may further include a relay (relay). Alternatively, it is understood as that any device that can perform data communication with the base station may be considered as the terminal device.

In embodiments of this application, an apparatus configured to implement a function of the terminal device may be the terminal device, or may be an apparatus, for example, a chip system, that can support the terminal device in implementing the function. The apparatus may be installed in the terminal device. In embodiments of this application, the chip system may include a chip, or may include the chip and another discrete device. In the technical solutions provided in embodiments of this application, an example in which the apparatus configured to implement the function of the terminal is the terminal device is used for description.

It should be understood that the network device and the terminal device may be at fixed positions, or may be movable. The network device and the terminal device may be deployed on land, and includes an indoor or outdoor device or a handheld or vehicle-mounted device; may be deployed on water; or may be deployed on an aircraft, a balloon, an artificial satellite in the air. Application scenarios of the network device and the terminal device are not limited in embodiments of this application.

Roles of the network device and the terminal device may be relative. For example, the helicopter or the uncrewed aerial vehicle 120i in FIG. 1b may be configured as a mobile base station. For the terminal device 120j that accesses the radio access network via 120i, the terminal device 120i is a network device. However, for the network device 110a, 120i is a terminal device. That is, 110a and 120i communicate with each other by using a radio air interface protocol. Certainly, 110a and 120i may alternatively communicate with each other by using an interface protocol between base stations. In this case, for 110a, 120i is also a network device. Therefore, the network device and the terminal device may be collectively referred to as communication apparatuses. 110a and 110b in FIG. 1b may be referred to as communication apparatuses with the function of the network device, and 120a to 120j in FIG. 1b may be referred to as communication apparatuses with the function of the terminal device.

Communication may be performed between the network device and the terminal device, between the network devices, and between the terminal devices by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection with a cell controlled by the network device. The cell that establishes the wireless connection with the terminal device is referred to as a serving cell of the terminal device. When the terminal device communicates with the serving cell, the terminal device is further interfered by a signal from a neighboring cell.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding embodiments of this application, and should not constitute any limitation on this application.

### 1. Internet of things (internet of things, IoT)

The IoT is an internet for thing-to-thing connection. The IoT extends a user end of the internet to any object, so that any object can perform information exchange and communication. Such a communication manner is also referred to as machine type communication (machine type communication, MTC).

More and more IoT devices have been deployed in lives of people, for example, smart water meters, shared bicycles, and devices targeted at sensing and data collection in smart cities, environment monitoring, smart home, and forest fire prevention. In the future, the IoT devices are to be used everywhere, and the IoT devices may be embedded in every piece of clothing, every parcel, every key, and the like. Almost all offline objects are to be online with enablement of an internet of things technology.

However, because there is a large quantity of IoT devices distributed in a wide range, a process of implementing connectivity of everything also causes great challenges to the industry. A foremost challenge is a power supply issue. Currently, the IoT technology is still mainly promoted by an operator, and an IoT module (a model in the IoT device) communicates with a network device (for example, a base station) by using a standard cellular protocol. Because the network device (for example, the base station) needs to cover an area as large as possible, the IoT module needs to be capable of performing communication when the IoT module is quite far away from the network device (for example, the base station). Consequently, the IoT module still needs to consume a current of up to 30 mA during wireless communication. Therefore, the current IoT module still needs to use a battery with a higher capacity to work. Consequently, it is difficult to make a size of the IoT module small, and costs of the IoT device are increased.

In addition, some low-power terminal devices play an important role in internet of things application such as medical care, smart home, industrial sensors, and wearable devices. However, due to limited sizes of such type of terminal devices, it is difficult to prolong running time of these devices by simply increasing battery capacities. Therefore, to prolong standby time of the terminal devices, power consumption in wireless communication needs to be reduced. A radio transceiver is one of most power-consumption components.

Therefore, to further popularize the IoT technology, if the IoT module is implanted into a human body or a smaller object, it is impossible to use the battery with the higher capacity. Instead, a smaller battery is used, or even a limitation of the battery is completely eliminated; or a method for reducing power consumption of the radio transceiver is designed, to resolve a problem of limitation of the costs, a size, power consumption, and the like of the IoT device.

### 2. Low-power ambient IoT (ambient IoT, A-IoT)

In the discussion of the 3GPP Release 18 standard, an item of study on a low-power wake-up signal and receiver for new radio (new radio, NR) (study on low-power wake-up signal and receiver for NR) was approved. In addition, the A-IoT was also discussed in the 3GPP plenary meeting.

A-IoTs are a type of ultra-low-power IoT devices, and are mainly classified into an active A-IoT and a passive A-IoT.

The active A-IoT is an active tag (tag) or an active terminal, and may complete transmitting of a radio signal by using energy stored in an energy storage module of the active A-IoT. In addition, the active A-IoT may alternatively have other descriptions, for example, an active A-IoT device, an active A-IoT terminal, an active A-IoT terminal device, an active IoT, an active IoT device, an active IoT terminal, an active IoT terminal device, the active tag, the active terminal, and an active terminal device. Unified descriptions are provided herein. Details are not described below again.

For example, FIG. 2 is a diagram of a network architecture of an active A-IoT. In FIG. 2, the active A-IoT device may directly communicate with a network device.

The passive A-IoT mainly relies on obtaining energy from an external radio frequency signal, and performs communication by using a backscatter radio frequency signal, to finally implement ultra-low power consumption or even zero power consumption. In addition, the passive A-IoT may alternatively have other descriptions, for example, a passive A-IoT device, a passive A-IoT terminal, a passive A-IoT terminal device, a passive IoT device, a passive IoT terminal, a passive IoT terminal device, a passive tag (passive tag), a battery-free terminal, a battery-free device, a batteryless terminal, a batteryless device, a retro-reflective terminal, a retro-reflective (backscatter) device, and the like. Unified descriptions are provided herein. Details are not described below again.

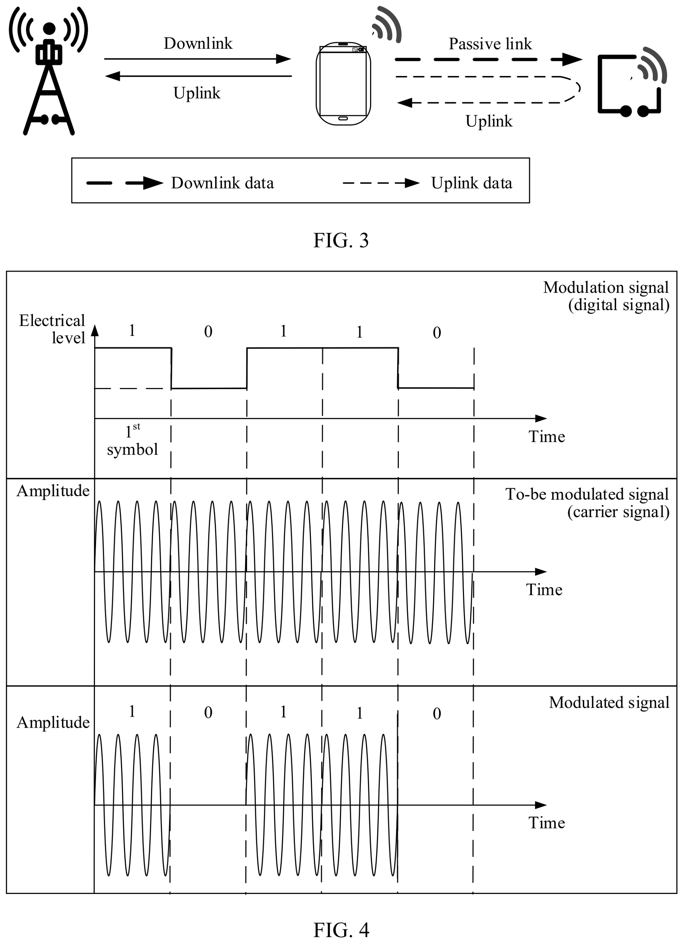

For example, FIG. 3 is a diagram of a network architecture of a passive A-IoT. In FIG. 3, a link between a terminal device (for example, a mobile phone) and the passive A-IoT device is a passive link (passive link). The passive A-IoT device (for example, the passive tag) cannot actively send a radio frequency signal. The terminal device (for example, the mobile phone) needs to first transmit a carrier signal (or an excitation signal). Accordingly, the passive A-IoT device (for example, the passive tag) receives the carrier signal (or the excitation signal), then modulates the carrier signal, and then sends a modulated signal to the terminal device (for example, the mobile phone) or a network device (for example, a base station). The carrier signal carries downlink data (downlink data, DL data), and the modulated signal carries uplink data (uplink data, UL data).

### 3. A-IoT receiver

In this application, the A-IoT receiver may be a receiver of the A-IoT device. In view of a feature of low power consumption, the A-IoT receivers do not include a high-power and high-precision phase-locked loop (phase-locked loop, PLL) module. The A-IoT receiver does not support coherent demodulation but supports low-power envelope detection.

For example, the A-IoT receiver may receive an on-off keying (on-off key, OOK)-modulated signal or an amplitude-shift keying (amplitude-shift keying, ASK)-modulated signal.

For another example, the A-IoT receiver may receive a signal that does not need fast Fourier transform (fast fourier transform, FFT) or inverse fast Fourier transform (inverse fast fourier transform, IFFT) in a generation or decoding process.

For still another example, the A-IoT receiver may receive a Manchester-encoded signal.

In this application, a receiver in the passive A-IoT device may be described as a passive A-IoT receiver, a backscatter receiver, a zero-power receiver, an ultra-low power receiver, a receiver that absorbs the radio frequency signal, a receiver that reflects the radio frequency signal, and the like.

In addition, the passive A-IoT receiver cannot actively send the radio frequency signal. Refer to the descriptions in FIG. 3. Details are not described again.

When OOK modulation is used, each bit (the bit may be an encoded bit) corresponds to one symbol. The symbol may also be referred to as a chip (chip). When a bit is 1, a signal is sent within a symbol length (that is, a signal power is not 0 within the symbol length). When a bit is 0, no signal is sent within a symbol length (that is, a signal power is 0 within the symbol length).

It should be understood that, in a possible alternative manner, when a bit is 0, a signal is sent within a symbol length (that is, a signal power is not 0 within the symbol length). When a bit is 1, no signal is sent within a symbol length (that is, a signal power is 0 within the symbol length). This is not limited in this application.

It should be noted that, in this application, the A-IoT receiver is different from a conventional high-power receiver. The conventional high-power receiver is a receiver that can receive a synchronization signal block (synchronization signal block, SSB), a physical downlink control channel (physical downlink control channel, PDCCH), a physical downlink shared channel (physical downlink shared channel, PDSCH), or a channel state information reference signal (channel state information reference signal, CSI-RS).

For example, the conventional high-power receiver may receive a binary phase shift keying (binary phase shift keying, BPSK), quadrature phase shift keying (quadrature phase shift keying, QPSK), 16 quadrature amplitude modulation (quadrature amplitude modulation, QAM), 64QAM, or 256QAM-modulated signal.

For another example, the conventional high-power receiver may receive a signal on which FFT or IFFT is performed in a generation or decoding process.

For another example, the conventional high-power receiver is a receiver whose local oscillator has high precision.

### 4-1. ASK

In ASK modulation scheme, amplitude of a carrier is adjusted based on a value of a digital signal, and a frequency and a phase of the carrier remain unchanged. As shown in FIG. 4, a digital signal in transmission is in a binary form including 0 and 1. In comparison with the carrier signal, transmission of a modulated signal is performed in a form of an amplitude signal when a bit is 1 (carrier amplitude remains unchanged); or transmission of a modulated signal is performed in a form of another amplitude signal when a bit is 0 (amplitude changes to 0). It is clear that, in the ASK modulation scheme, 1-bit data is modulated into one symbol, and the modulated signal corresponds to two symbol waveforms for transmission of two types of data: 1 and 0. 2ASK may also be referred to as OOK.

In the ASK modulation scheme, the carrier signal may be denoted as: *f*(*t*) = *A*sin(2*πft + θ*) Formula (1)

*f*(*t*) represents the carrier signal, *A* represents the amplitude of the carrier signal, *f* represents a frequency of the carrier signal, and *θ* represents an initial phase of the carrier signal.

### 4-2. OOK

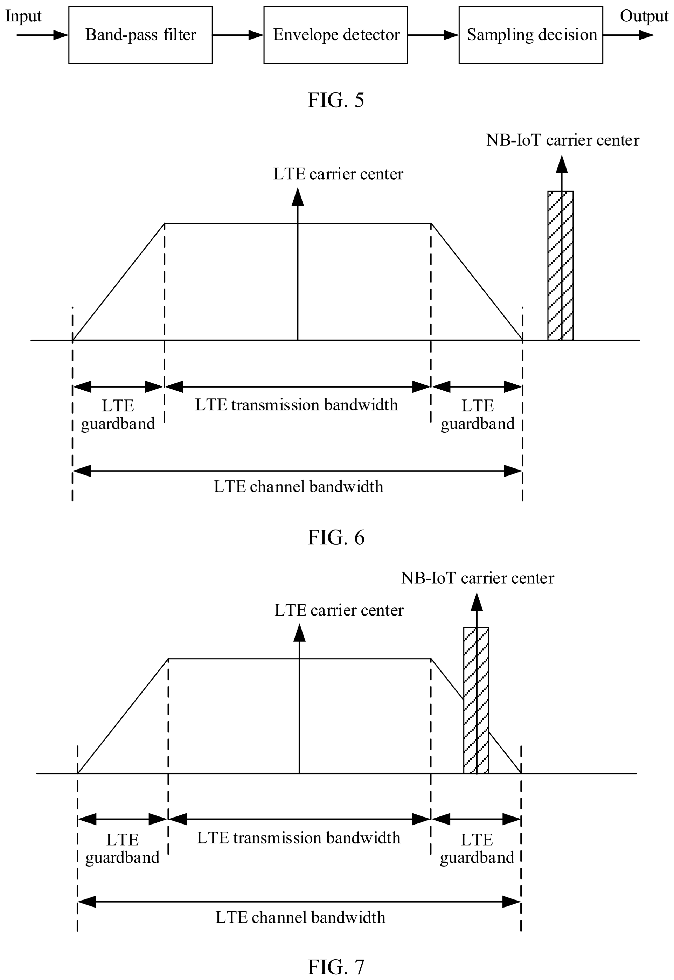

For OOK demodulation, non-coherent demodulation is mainly used for signal demodulation. The non-coherent demodulation includes envelope detection, and a common method for the envelope detection is performing unidirectional filtering by using a diode and then performing low-pass filtering. A signal passes through a band-pass filter and an envelope detector, and undergoes sampling decision, to implement OOK signal demodulation, as shown in FIG. 5.

For a low-power non-coherent receiver, it is difficult to perform information demodulation at a resource element (resource element, RE) granularity. Generally, a width of the band-pass filter is of an order of magnitude of a resource block (resource block, RB). A signal envelope feature within a bandwidth (the order of magnitude of the RB) of the band-pass filter is measured, to obtain information carried by the signal.

### 5. Narrowband internet of things (narrowband internet of things, NB-IoT) deployment mode

An NB-IoT occupies 180 kHz bandwidth in frequency domain, and the bandwidth corresponds to one RB in LTE transmission. A subcarrier spacing is 3.75 kHz or 15 kHz. For example, when the NB-IoT and an LTE network coexist, three deployment manners are supported:

A first deployment manner is standalone (standalone) deployment: The NB-IoT uses a standalone frequency band, for example, uses one or more carriers, to perform NB-IoT-related information transmission, as shown in FIG. 6. The deployment manner is mainly applicable to global system for mobile communications (global system for mobile communications, GSM) frequency band refarming. A GSM single-carrier bandwidth is 200 kHz. The NB-IoT may be deployed in a GSM frequency band, and 10 kHz is reserved at each end of the frequency band as a guardband.

A second deployment manner is guardband (guardband) deployment: The NB-IoT is deployed by using an unused RB resource in a guardband of an LTE carrier, as shown in FIG. 7. An LTE channel bandwidth includes LTE guardbands and an LTE transmission bandwidth.

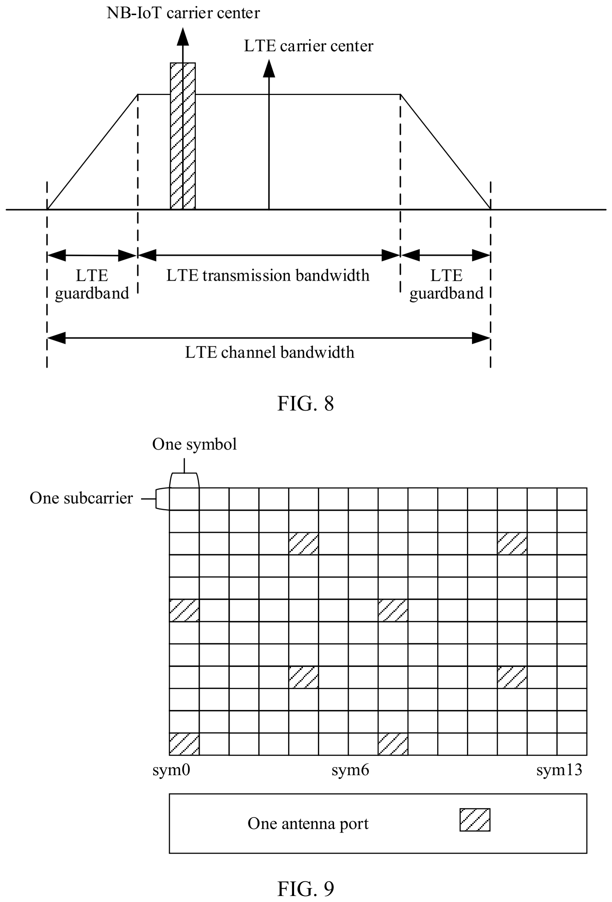

A third deployment manner is in-band (In-band) deployment: The NB-IoT is deployed by using an RB on a transmission bandwidth of an LTE carrier (namely, an LTE transmission bandwidth), as shown in FIG. 8.

The network device indicates, by using an operation mode information element (operationModelnfo-r13) of a master information block-narrowband (MasterInformationBlock-NB), a deployment mode currently used by an NB-IoT cell. In other words, the terminal device can learn, only after receiving the MIB-NB, of the deployment mode used by the cell.

However, in the in-band deployment, an unavailable resource of the NB-IoT includes:
1. Resource for a cell-specific reference signal (cell reference signal, CRS) of the LTE network.
2. Resource occupied by the CSI-RS. The CSI-RS is a reference signal that may exist in the LTE network.
3. Resource for a control area of an LTE downlink control channel. The downlink control channel may include a layer 1 (layer 1, L1) control channel or a layer 2 (layer 2, L2) control channel. The downlink control channel may include one or more of the following: a physical control format indicator channel (physical control format indicator channel, PCFICH), a physical hybrid automatic repeat request indicator channel (physical hybrid-ARQ indicator channel, PHICH), and the physical downlink control channel (physical downlink control channel, PDCCH). The resource for the control area may include one or more REs, or the resource for the control region includes one or more orthogonal frequency division multiplexing (orthogonal frequency division multiplexing, OFDM) symbols. In addition, the OFDM symbol may also be referred to as a symbol for short. The OFDM symbol and the symbol have a same meaning, and may be replaced with each other.

The foregoing three resources occupy an entire LTE system bandwidth. When the NB-IoT is deployed, the foregoing resources need to be avoided, to ensure original LTE signal transmission.

In addition, a signal that occupies the entire system bandwidth may be described as an always-on signal.

However, in other deployment modes such as the guardband deployment and the standalone deployment, the foregoing problem does not exist.

### 6. A-IoT deployment mode

Currently, when the A-IoT and the LTE network coexist, three deployment manners are supported: the standalone deployment, the guardband deployment, and the in-band deployment. Refer to the descriptions of the NB-IoT deployment mode.

### 7. 5G NR SSB

An SSB in NR mainly includes the following four items:
1. Primary synchronization sequence (primary synchronization signal, PSS), namely, a signal that is first searched for when the terminal device is powered on and enters an NR system. In this phase, the terminal device searches for a cell on a given carrier frequency. If the terminal device detects the PSS, the terminal device determines a PSS periodicity based on the PSS. That is, the terminal device synchronizes with the PSS periodicity.
2. Secondary synchronization sequence (secondary synchronization signal, SSS). That is, if the terminal device detects the PSS, the terminal device determines sending timing of the SSS based on the PSS. The terminal device determines a physical cell identifier (physical cell identifier, PCI) by detecting the SSS.
3. Physical broadcast channel (physical broadcast channel, PBCH). Information mainly carried on the PBCH is referred to as a master information block (master information block, MIB). The MIB includes information such as a system frame number, a cell barred flag, and a system information block (system information block, SIB) parameter set. The terminal device obtains, based on the MIB, remaining system information broadcast by a network.
4. Demodulation reference signal for PBCH (demodulation reference signal for PBCH, DMRS for PBCH). Because there is no CRS in the NR system, the terminal device first obtains the DMRS for PBCH when demodulating the PBCH.

The PSS, the SSS, the PBCH, and a DMRS (namely, the DMRS for PBCH) are configured for each beam, so that the terminal device implements downlink synchronization. The PSS, the SSS, the PBCH, and the DMRS (namely, the DMRS for PBCH) are simultaneously sent. In the NR system, a bundling design is performed on the PSS, the SSS, the PBCH, and the DMRS (namely, the DMRS for PBCH), to ensure simultaneous delivery, and the PSS, the SSS, the PBCH, and the DMRS are collectively referred to as the SSB (the SSB may also be denoted as an SS/PBCH block). A beam carrying the SSB is described as an SSB beam.

In addition, in a moving process, the terminal device continuously performs cell search and measurement based on the SSB, and selects an appropriate SSB beam, to implement initial access and mobility management.

In the NR system, more antennas are used to enhance coverage. However, the more antennas cause more narrow beams radiated by the antennas, and it is difficult for a single narrow beam to cover an entire cell. Therefore, in the NR system, the entire cell is covered through beam sweeping. To be specific, the network device may send a beam in a beam direction at a moment, and the network device sends a beam in another beam direction at another moment, and sends different beams at a plurality of moments to cover the entire cell.

In the NR system, an SSB periodicity is 20 ms, occupies 20 RBs, and does not occupy the entire system bandwidth. In addition, a time-frequency position of the SSB is flexible. When the SSB and another network are jointly deployed, a network device side effectively avoids the SSB in NR. Details are not described.

### 8. CRS in the LTE network

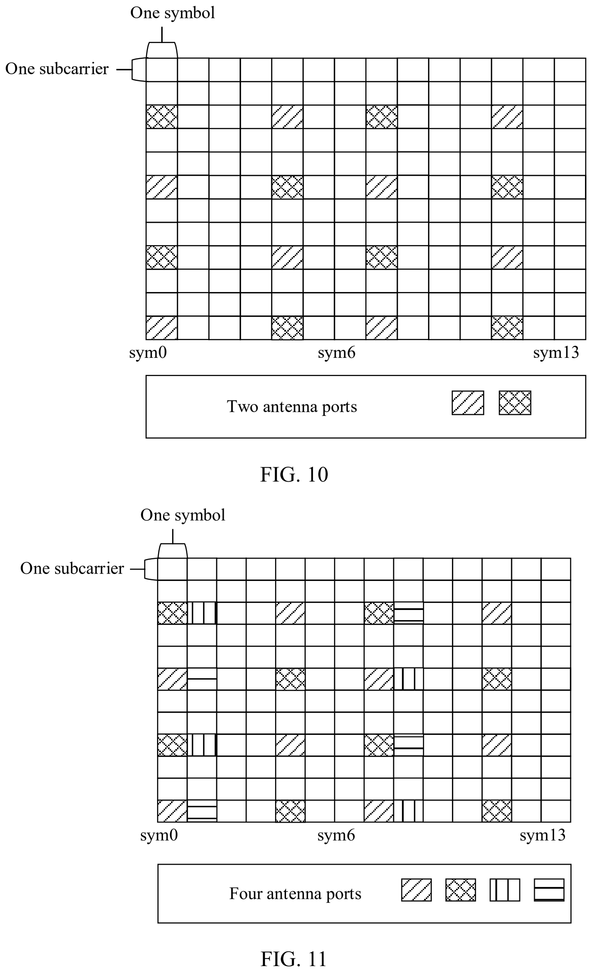

In the LTE network, the CRS occupies the entire LTE system bandwidth in frequency domain. Specifically, the CRS is sent on each RB within an entire downlink system bandwidth in each downlink subframe. In a same cell, one CRS may be used, and one antenna port is correspondingly used, as shown in FIG. 9. In a same cell, two CRSs may be used, and two antenna ports are correspondingly used, as shown in FIG. 10. In a same cell, four CRSs may be used, and four antenna ports are correspondingly used, as shown in FIG. 11. In other words, for different quantities of antenna ports, CRS mapping manners are different.

In FIG. 9 to FIG. 11, on each antenna port, an RE occupied by the CRS is no longer for other transmission. In addition, if an RE on an antenna port is for sending the CRS, an RE that is on another antenna port and that has a same time-frequency position is no longer for other transmission, to avoid interference of transmission on the another antenna port to the CRS.

The terminal device learns of a cell-specific antenna port quantity (for example, 1, 2, or 4) by receiving the MIB, to determine a quantity of CRSs used in the same cell, that is, antenna ports on which transmission of the CRSs is performed.

In addition, in the LTE network, the PDCCH occupies the entire LTE system bandwidth in frequency domain, and occupies the first three symbols of a subframe in time domain.

### 9. NB-IoT narrowband reference signal (narrowband reference signal, NRS)

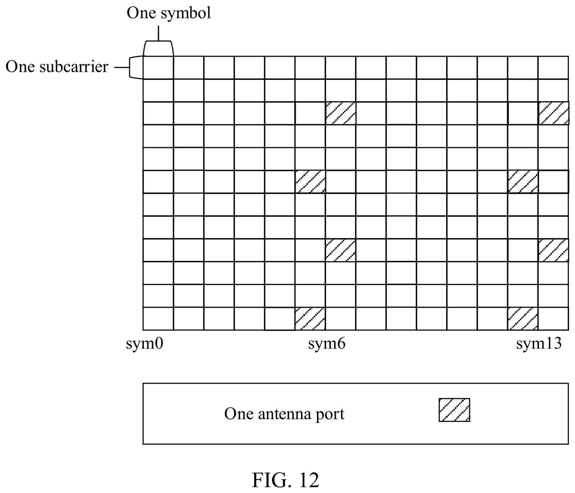

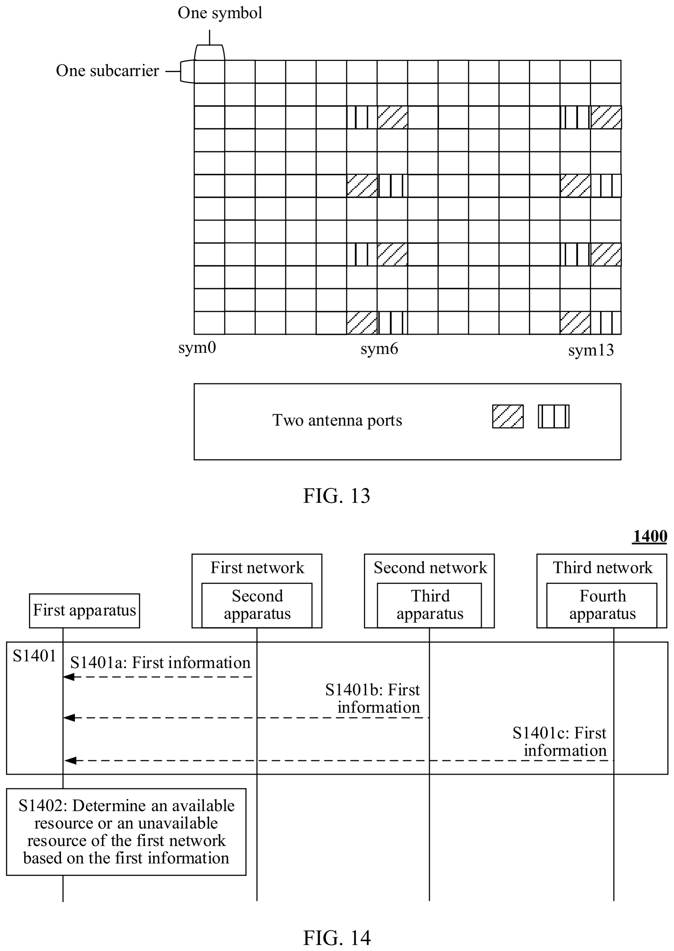

The NRS is mainly for channel estimation of a downlink physical channel and downlink channel quality measurement, for example, measurement of a reference signal received power (reference signal received power, RSRP) and reference signal received quality (reference signal received quality, RSRQ). In an NB-IoT network, each downlink (which may also be referred to as a downlink NB-IoT antenna port) corresponds to one NRS. When a downlink antenna port quantity is 1, an NRS resource mapping pattern is shown in FIG. 12. When a downlink antenna port quantity is 2, an NRS resource mapping pattern is shown in FIG. 13. In other words, for different quantities of antenna ports, NRS mapping manners are different.

In addition, a manner of generating the NRS is the same as a manner of generating the CRS in LTE, and the NRS occupies an entire system bandwidth of the NB-IoT network, and belongs to an always-on signal in the NB-IoT.

### 10. Joint deployment of the NB-IoT and the LTE network

After determining a to-be-communicated cell, the terminal device needs to obtain system information (for example, the MIB-NB or a SIB-NB) of the cell. The following describes resource mapping solutions used when the LTE network and the NB-IoT are jointly deployed.

In a first solution, in the in-band deployment, the network device indicates the following information to the terminal device:
Information A: a deployment mode of the NB-IoT and the LTE network. For example, whether the deployment mode is the in-band deployment, the guardband deployment, or the standalone deployment. The information A is indicated by using two bits in the MIB-NB.
   In addition, in the in-band deployment, there are two cases: SamePCI and diffPCI. SamePCI indicates that a same cell identity, for example, the PCI, is used for the NB-IoT cell and an LTE cell, and diffPCI indicates that different cell identities are used for the NB-IoT cell and the LTE cell.
Information B: an antenna port quantity of the NB-IoT and a raster offset (raster offset). The raster offset indicates a position of an NB-IoT carrier within the LTE system bandwidth, for example, a distance between the NB-IoT carrier and an LTE carrier center and an offset between an NB-IoT center frequency and a nearest frequency that is an integer multiple of 100 kHz. For example, there are four raster offsets such as ±7.5 kHz and ±2.5 kHz. The information B is indicated by an eutra-CRSSequenceInfo-r13 field in the MIB-NB, for example, occupies five bits in the eutra-CRSSequenceInfo-r13 field.

It is easy to understand that, when the information A indicates that the deployment mode is the in-band deployment, if the different cell identities are used for the NB-IoT cell and the LTE cell (that is, diffPCI), the MIB does not include the information B; or if the same cell identity is used for the NB-IoT cell and the LTE cell (that is, SamePCI), the MIB includes the information B. In this case, the network device indicates a resource mapping mode in the joint deployment by using seven bits.

When the information A indicates that the deployment mode is the guardband deployment or the standalone deployment, the MIB does not include the information B.

In a second solution, in the guardband deployment, the network device does not need to indicate a raster offset to the terminal device.

In a third solution, in the standalone deployment, an offset between a center frequency of an anchor carrier of the NB-IoT and a nearest 100 kHz raster does not exceed 7.5 kHz, so that the terminal device synchronizes with the network.

In conclusion, when the NB-IoT and the LTE network are jointly deployed, a total of seven bits in the MIB-NB needed for indication.

### 11. Joint deployment of the A-IoT and another network

When the A-IoT and the another network (for example, the LTE network or the NB-IoT) are jointly deployed, a signal of the another network may occupy an entire system bandwidth, and the entire system bandwidth is no longer allocated to the A-IoT for use. However, the terminal device cannot learn of an available resource or an unavailable resource of the A-IoT, and communication performance is affected.

In view of this, embodiments of this application provide a resource indication method. The method may be applied to the communication system shown in FIG. 1a. In the resource indication method provided in embodiments of this application, a first apparatus receives first information, and determines an available resource or an unavailable resource of a first network based on the first information.

In other words, the first apparatus can determine the available resource or the unavailable resource of the first network based on the first information. In this way, even if the first network is an A-IoT network, the first network and another network are jointly deployed, the first apparatus can learn of an available resource or an unavailable resource of the A-IoT network, and this helps improve system communication performance.

It should be understood that names of messages between devices, names of parameters in the messages, or the like in the following embodiments of this application are merely examples, and there may alternatively be other names during specific implementation. This is not specifically limited in embodiments of this application.

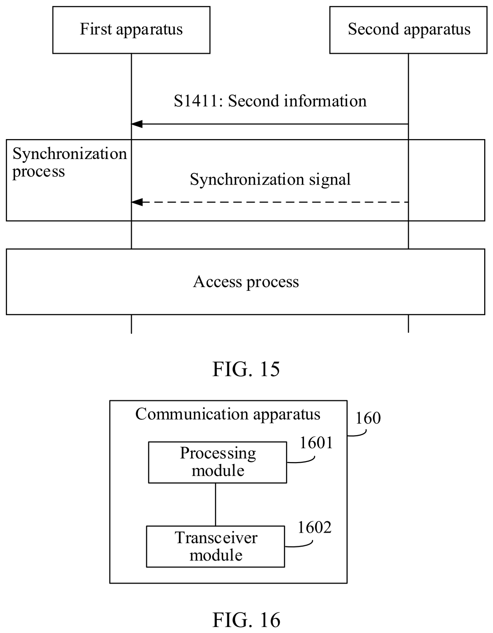

With reference to FIG. 14 and FIG. 15, the following describes in detail the resource indication method provided in embodiments of this application. A resource indication method 1400 provided in an embodiment of this application includes the following operations.

S1401: A first apparatus receives first information.

For example, the first apparatus is described as follows:
The first apparatus may be a terminal device. Refer to the descriptions in FIG. 1a or FIG. 1b. Details are not described again.

The first apparatus is served by a first network. For example, the first apparatus sends or receives service data through the first network. In this embodiment of this application, the first network may be an A-IoT network.

The first apparatus satisfies at least one of the following:
1. supporting non-coherent demodulation;
2. supporting envelope detection;
3. supporting ASK;
4. supporting FSK;
5. supporting a non-OFDM receiver structure;
6. not supporting OFDM reception and demodulation; and
7. not supporting in-phase/quadrature (in-phase/quadrature, IQ) demodulation.

For example, the first apparatus includes an A-IoT receiver. For details, refer to the descriptions of the A-IoT receiver. Details are not described again.

For example, an implementation process of S1401 is described based on three examples (the following example 1 to example 3).

Example 1: S1401 includes S1401a: The first apparatus receives the first information from the first network.

For example, a second apparatus of the first network sends the first information to the first apparatus. Accordingly, the first apparatus receives the first information from the second apparatus of the first network.

For example, the second apparatus may be a network device. Refer to the descriptions in FIG. 1a or FIG. 1b. Details are not described again.

It should be understood that applicable scenarios of the example 1 are described as follows:
In a first scenario, the first network is deployed, but a second network and a third network are not deployed.
In a second scenario, the first network and a second network are deployed, but a third network is not deployed.
In a third scenario, the first network, a second network, and a third network are deployed.

In the foregoing three scenarios, the first network may be the A-IoT network, the second network may be an LTE network, and the third network may be an NB-IoT network. Alternatively, the first network may be the A-IoT network, the second network may be an NB-IoT network, and the third network may be an LTE network.

Example 2: S1401 includes S1401b: The first apparatus receives the first information from a second network.

For example, a third apparatus of the second network sends the first information to the first apparatus. Accordingly, the first apparatus receives the first information from the third apparatus of the second network.

For example, the third apparatus is similar to a second apparatus, and may be a network device. Refer to the descriptions in FIG. 1a or FIG. 1b. Details are not described again.

It should be understood that applicable scenarios of the example 2 are described as follows:
In a first scenario, the first network and the second network are deployed, but a third network is not deployed.
In a second scenario, the first network, the second network, and a third network are deployed.

In the foregoing two scenarios, the first network may be the A-IoT network, the second network may be an LTE network, and the third network may be an NB-IoT network. Alternatively, the first network may be the A-IoT network, the second network may be an NB-IoT network, and the third network may be an LTE network.

Example 3: S1401 includes S1401c: The first apparatus receives the first information from a third network.

For example, a fourth apparatus of the third network sends the first information to the first apparatus. Accordingly, the first apparatus receives the first information from the fourth apparatus of the third network.

For example, the fourth apparatus is similar to a second apparatus, and may be a network device. Refer to the descriptions in FIG. 1a or FIG. 1b. Details are not described again.

It should be understood that an applicable scenario of the example 3 is described as follows: The first network, a second network, and the third network are deployed. The first network may be the A-IoT network, the second network may be an LTE network, and the third network may be an NB-IoT network. Alternatively, the first network may be the A-IoT network, the second network may be an NB-IoT network, and the third network may be an LTE network.

For example, the first information is described as follows: The first information is carried on a broadcast channel. In other words, the first apparatus receives the first information through a broadcast channel.

For example, in the foregoing example 1, the second apparatus of the first network sends the first information through the broadcast channel. Accordingly, the first apparatus receives the first information from the second apparatus of the first network through the broadcast channel.

For another example, in the foregoing example 2, the third apparatus of the second network sends the first information through the broadcast channel. Accordingly, the first apparatus receives the first information from the third apparatus of the second network through the broadcast channel.

For still another example, in the foregoing example 3, the fourth apparatus of the third network sends the first information through the broadcast channel. Accordingly, the first apparatus receives the first information from the fourth apparatus of the third network through the broadcast channel.

After the first apparatus receives the first information, the first apparatus performs S1402:
S1402: The first apparatus determines an available resource or an unavailable resource of the first network based on the first information.

For example, when the first information indicates the available resource of the first network, the first apparatus determines the available resource of the first network based on the first information. Accordingly, the first apparatus can also determine the unavailable resource of the first network.

For another example, when the first information indicates the unavailable resource of the first network, the first apparatus determines the unavailable resource of the first network based on the first information. Accordingly, the first apparatus can also determine the available resource of the first network.

Next, the first information is described by using three examples (the following example A, example B, and example C).

Example A: The first information is related to the second network, where the second network may be the LTE network.

The example A is described as follows:
In a first aspect, the first information indicates that a time-frequency resource occupied by the first network is within a time-frequency resource of the second network; or the first information indicates that a time-frequency resource occupied by the first network is outside a time-frequency resource of the second network.

Alternatively, in a possible alternative description:
The first information indicates that a resource occupied by the first network is within a transmission bandwidth of the second network. Alternatively, the first information indicates that a resource occupied by the first network is not within a transmission bandwidth of the second network. In this case, the second network may exist, or may not exist.

For example, that the time-frequency resource occupied by the first network is within the time-frequency resource of the second network may be understood as that deployment of the first network and the second network is in-band (In-band) deployment.

For example, in frequency domain, it may be understood as that frequency bands (or frequencies) occupied by the first network and the second network are the same. For example, the frequency band occupied by the first network is 180 kHz, the frequency band occupied by the second network is 180 kHz, and the frequency bands occupied by the first network and the second network completely overlap.

For another example, in frequency domain, it may be understood as that frequency bands (or frequencies) occupied by the first network and the second network are partially the same. For example, the frequency band occupied by the first network is 180 kHz, and the frequency band occupied by the second network is 2 MHz. That is, the frequency band (or the frequency) occupied by the first network is included in the frequency band (or the frequency) occupied by the second network.

For example, that the time-frequency resource occupied by the first network is outside the time-frequency resource of the second network may be understood as that deployment of the first network and the second network is non-in-band (In-band) deployment, for example, standalone (standalone) deployment or guardband (guardband) deployment. Alternatively, the first network is deployed, but the second network is not deployed.

It should be understood that, in embodiments of this application, meanings of the following descriptions are the same, and may be replaced with each other: An X^{th} network is not deployed, and the X^{th} network does not exist. For example, the second network is not deployed, the second network does not exist, and the two descriptions are equivalent.

It should be understood that, in embodiments of this application, meanings of the following descriptions are the same, and may be replaced with each other: The X^{th} network and a Y^{th} network are jointly deployed, the X^{th} network and the Y^{th} network coexist, and the X^{th} network and the Y^{th} network are deployed.

Further, that the first information indicates that the time-frequency resource occupied by the first network is within the time-frequency resource of the second network includes: The first information indicates that the time-frequency resource occupied by the first network is within the time-frequency resource of the second network in a first state. The first state includes at least one of the following: The first apparatus is in an idle (idle) state or a connected (connected) state, or the first apparatus has accessed the first network.

The idle state means that the first apparatus does not establish an RRC connection to a network side, and the network side (for example, a base station) does not store a context of the first apparatus. In addition, the idle state may also be referred to as an RRC idle state. In embodiments of this application, the "idle state" and the "RRC idle state" are a same concept, and may be replaced with each other.

The connected state means that the first apparatus establishes an RRC connection to a network side, and may perform data transmission through the RRC connection. In addition, the connected state may also be referred to as an RRC connected state. In embodiments of this application, the "connected state" and the "RRC connected state" are a same concept, and the "connected state" and the "RRC connected state" may be replaced with each other.

That the first apparatus has accessed the first network may be understood as that the first apparatus has performed a random access (random access, RA) process and established an RRC connection to a network side.

That the first information indicates that the time-frequency resource occupied by the first network is outside the time-frequency resource of the second network includes: The first information indicates that the time-frequency resource occupied by the first network is outside the time-frequency resource of the second network in a first state. For the first state, refer to the descriptions in the foregoing paragraphs. Details are not described again.

In a second aspect, the first information indicates an antenna port quantity of the second network, and the antenna port quantity of the second network includes a first antenna port quantity, a second antenna port quantity, and a third antenna port quantity; and a state value of the first information includes a first value and a second value, where the first value indicates the first antenna port quantity and/or the second antenna port quantity, the second value indicates the third antenna port quantity, and resource mapping patterns corresponding to the first antenna port quantity and the second antenna port quantity are the same.

Further, the state value of the first information further includes a third value; the first value indicates that the time-frequency resource occupied by the first network is within the time-frequency resource of the second network; the second value indicates that the time-frequency resource occupied by the first network is within the time-frequency resource of the second network; and the third value indicates that the time-frequency resource occupied by the first network is outside the time-frequency resource of the second network or that the second network is not deployed, or the third value is a reserved (reserved) state.

For example, the second network is the LTE network, and an antenna port of the second network is an antenna port of a CRS. The first antenna port quantity is 1, the second antenna port quantity is 2, and the third antenna port quantity is 4. The resource mapping pattern corresponding to the first antenna port quantity may be understood as a resource mapping pattern used when the first antenna port quantity is for sending a CRS, as shown in FIG. 9. In FIG. 9, the CRS occupies time domain symbols whose indexes are 0, 4, 7, and 11 in a slot. The resource mapping pattern corresponding to the second antenna port quantity may be understood as a resource mapping pattern used when the second antenna port quantity is for sending CRSs, as shown in FIG. 10. In FIG. 10, the CRSs occupy time domain symbols whose indexes are 0, 4, 7, and 11 in a slot. A resource mapping pattern corresponding to the third antenna port quantity may be understood as a resource mapping pattern used when the third antenna port quantity is for sending CRSs, as shown in FIG. 11. In FIG. 11, the CRSs occupy time domain symbols whose indexes are 0, 1, 4, 7, 8, and 11 in a slot. In this embodiment of this application, time domain resources occupied by the resource mapping patterns corresponding to the first antenna port quantity and the second antenna port quantity are the same.

It should be noted that, in embodiments of this application, a time domain symbol includes an OFDM symbol. In a subframe, indexes of time domain symbols start from 0.

For example, the state value of the first information is shown in Table 1.

**Table 1**

| Deployment mode | | State value |
|---|---|---|
| In-band (In-band) deployment | LTE antenna port quantity: 1/2 | 10 |
| | LTE antenna port quantity: 4 | 11 |
| Non-in-band (In-band) deployment | Guardband deployment | One of 00, 01, or a reserved state |
| | Standalone deployment | |
| | Without LTE | |

In Table 1, an example in which the first network is the A-IoT network and the second network is the LTE network is used. The "in-band (In-band) deployment" indicates that a time-frequency resource occupied by the A-IoT network is within a time-frequency resource occupied by the LTE network. The "non-in-band (In-band) deployment" indicates that a time-frequency resource occupied by the A-IoT network is outside a time-frequency resource occupied by the LTE network.

In Table 1, the "LTE antenna port quantity: 1/2" indicates that a CRS antenna port quantity is 1 or 2, namely, the first antenna port quantity or the second antenna port quantity. The "LTE antenna port quantity: 4" indicates that a CRS antenna port quantity is 4, namely, the third antenna port quantity.

In Table 1, the state value of the first information is a bit value of two bits. Specifically, when the time-frequency resource occupied by the A-IoT network is within the time-frequency resource occupied by the LTE network (that is, in-band in Table 1), and the CRS antenna port quantity is 1 or 2, the state value of the first information is 10. When the time-frequency resource occupied by the A-IoT network is within the time-frequency resource occupied by the LTE network (for example, in-band), and the CRS antenna port quantity is 4, the state value of the first information is 11. When the time-frequency resource occupied by the A-IoT network is outside the time-frequency resource occupied by the LTE network (that is, non-in-band in Table 1), for example, the deployment is the standalone deployment, the guardband deployment, or deployment without LTE, the state value of the first information is one of 00, 01, and the reserved state.

It should be understood that, in the example A, the available resource of the first network does not include a time domain symbol occupied by the CRS, or the unavailable resource of the first network includes a time domain symbol occupied by the CRS.

For example, a first resource set is denoted as the available resource of the first network. Therefore, to avoid the CRS, the first resource set includes a time domain symbol identified by at least one of the following indexes: 3, 5, 6, 9, 10, 12, and 13. The first resource set includes a time domain resource occupied by the first information. For example, a time domain resource occupied by the broadcast channel carrying the first information is included in the first resource set. Alternatively, the first resource set is further for transmission of a data signal of the first network and/or a control signal of the first network.

It should be understood that, in the example A, when the third value indicates that the second network is not deployed, or the third value is the reserved state, it may be understood as that the available resource of the first network is all resources, or the unavailable resource of the first network does not exist.

In a third aspect, the first information indicates a symbol quantity of a control channel of the second network.

For example, three symbol quantities are used as an example. To be specific, the symbol quantity indicated by the first information includes a first symbol quantity, a second symbol quantity, and a third symbol quantity; and the state value of the first information includes a fourth value, a fifth value, and a sixth value, where the fourth value indicates the first symbol quantity, the fifth value indicates the second symbol quantity, and the sixth value indicates the third symbol quantity.

In this embodiment of this application, the control channel may include a PDCCH. The first symbol quantity may be 1. For example, the control channel occupies a time domain symbol whose index is 0 in a subframe. The second symbol quantity may be 2. For example, the control channel occupies time domain symbols whose indexes are 0 and 1 in a subframe. The third symbol quantity may be 3. For example, the control channel occupies time domain symbols whose indexes are 0, 1, and 2 in a subframe.

Further, the state value of the first information further includes a seventh value; the fourth value indicates that the time-frequency resource occupied by the first network is within the time-frequency resource of the second network; the fifth value indicates that the time-frequency resource occupied by the first network is within the time-frequency resource of the second network; the sixth value indicates that the time-frequency resource occupied by the first network is within the time-frequency resource of the second network; and the seventh value indicates that the time-frequency resource occupied by the first network is outside the time-frequency resource of the second network or that the second network is not deployed, or the seventh value is the reserved state.

For example, the state value of the first information is shown in Table 2.

**Table 2**

| Deployment mode | | State value |
|---|---|---|
| In-band (In-band) deployment | Quantity of symbols occupied by a control channel: 1 | 00 |
| | Quantity of symbols occupied by the control channel: 2 | 01 |
| | Quantity of symbols occupied by the control channel: 3 | 10 |
| Non-in-band (In-band) deployment | Guardband deployment | One of 11 or a reserved state |
| | Standalone deployment | |
| | Without LTE | |

In Table 2, the example in which the first network is the A-IoT network and the second network is the LTE network is used. The "in-band (In-band) deployment" indicates that the time-frequency resource occupied by the A-IoT network is within the time-frequency resource occupied by the LTE network. The "non-in-band (In-band) deployment" indicates that the time-frequency resource occupied by the A-IoT network is outside the time-frequency resource occupied by the LTE network.

In Table 2, the "quantity of symbols occupied by a control channel: 1" indicates the first symbol quantity. The "quantity of symbols occupied by the control channel: 2" indicates the second symbol quantity. The "quantity of symbols occupied by the control channel: 3" indicates the third symbol quantity.

In Table 2, the state value of the first information is a bit value of two bits. Specifically, when the time-frequency resource occupied by the A-IoT network is within the time-frequency resource occupied by the LTE network (for example, in-band in Table 2), and the quantity of symbols occupied by the control channel is 1 (that is, the first symbol quantity is 1), the state value of the first information is 00. When the time-frequency resource occupied by the A-IoT network is within the time-frequency resource occupied by the LTE network (for example, in-band in Table 2), and the quantity of symbols occupied by the control channel is 2 (that is, the second symbol quantity is 2), the state value of the first information is 01. When the time-frequency resource occupied by the A-IoT network is within the time-frequency resource occupied by the LTE network (for example, in-band in Table 2), and the quantity of symbols occupied by the control channel is 3 (that is, the third symbol quantity is 3), the state value of the first information is 10. When the time-frequency resource occupied by the A-IoT network is outside the time-frequency resource occupied by the LTE network (for example, non-in-band in Table 2), for example, the deployment is the standalone deployment, the guardband deployment, or deployment without LTE, the state value of the first information is one of 11 and the reserved state.

For another example, two symbol quantities are used as an example. To be specific, the symbol quantity includes a first symbol quantity and a second symbol quantity; and the state value of the first information includes a fourth value and a fifth value, where the fourth value indicates the first symbol quantity, and the fifth value indicates the second symbol quantity.

In this embodiment of this application, the control channel may include a PDCCH. The first symbol quantity may be 1. For example, the control channel occupies a time domain symbol whose index is 0 in a subframe. The second symbol quantity may be 2. For example, the control channel occupies time domain symbols whose indexes are 0 and 1 in a subframe.

Further, the state value of the first information further includes a seventh value; the fourth value indicates that the time-frequency resource occupied by the first network is within the time-frequency resource of the second network; the fifth value indicates that the time-frequency resource occupied by the first network is within the time-frequency resource of the second network; and the seventh value indicates that the time-frequency resource occupied by the first network is outside the time-frequency resource of the second network or that the second network is not deployed, or the seventh value is the reserved state.

For example, the state value of the first information is shown in Table 3.

**Table 3**

| Deployment mode | | State value |
|---|---|---|
| In-band (In-band) deployment | Quantity of symbols occupied by a control channel: 1 | 00 |
| | Quantity of symbols occupied by the control channel: 2 | 01 |
| Non-in-band (In-band) deployment | Guardband deployment | One of 11 or a reserved state |
| | Standalone deployment | |
| | Without LTE | |

In Table 3, the example in which the first network is the A-IoT network and the second network is the LTE network is used. The "in-band (In-band) deployment" indicates that the time-frequency resource occupied by the A-IoT network is within the time-frequency resource occupied by the LTE network. The "non-in-band (In-band) deployment" indicates that the time-frequency resource occupied by the A-IoT network is outside the time-frequency resource occupied by the LTE network.

In Table 3, the "quantity of symbols occupied by a control channel: 1" indicates the first symbol quantity. The "quantity of symbols occupied by the control channel: 2" indicates the second symbol quantity.

In Table 3, the state value of the first information is a bit value of two bits. Specifically, when the time-frequency resource occupied by the A-IoT network is within the time-frequency resource occupied by the LTE network (for example, in-band in Table 3), and the quantity of symbols occupied by the control channel is 1 (that is, the first symbol quantity is 1), the state value of the first information is 00. When the time-frequency resource occupied by the A-IoT network is within the time-frequency resource occupied by the LTE network (for example, in-band in Table 3), and the quantity of symbols occupied by the control channel is 2 (that is, the second symbol quantity is 2), the state value of the first information is 01. When the time-frequency resource occupied by the A-IoT network is outside the time-frequency resource occupied by the LTE network (for example, non-in-band in Table 3), for example, the deployment is the standalone deployment, the guardband deployment, or deployment without LTE, the state value of the first information is one of 11 and the reserved state.

For still another example, one symbol quantity is used as an example. To be specific, the symbol quantity includes a first symbol quantity; and the state value of the first information includes a fourth value, where the fourth value indicates the first symbol quantity.

In this embodiment of this application, the control channel may include a PDCCH. The first symbol quantity may be 1. For example, the control channel occupies a time domain symbol whose index is 0 in a subframe.

Further, the state value of the first information further includes a seventh value; the fourth value indicates that the time-frequency resource occupied by the first network is within the time-frequency resource of the second network; and the seventh value indicates that the time-frequency resource occupied by the first network is outside the time-frequency resource of the second network or that the second network is not deployed, or the seventh value is the reserved state.

For example, the state value of the first information is shown in Table 4.

**Table 4**

| Deployment mode | | State value |
|---|---|---|
| In-band (In-band) deployment | Quantity of symbols occupied by a control channel: 1 | 00 |
| Non-in-band (In-band) deployment | Guardband deployment | One of 11 or a reserved state |
| | Standalone deployment | |
| | Without LTE | |

In Table 4, the example in which the first network is the A-IoT network and the second network is the LTE network is used. The "in-band (In-band) deployment" indicates that the time-frequency resource occupied by the A-IoT network is within the time-frequency resource occupied by the LTE network. The "non-in-band (In-band) deployment" indicates that the time-frequency resource occupied by the A-IoT network is outside the time-frequency resource occupied by the LTE network.

In Table 4, the "quantity of symbols occupied by a control channel: 1" indicates the first symbol quantity.

In Table 4, the example in which the first network is the A-IoT network and the second network is the LTE network is used, and the state value of the first information is a bit value of two bits. Specifically, when the time-frequency resource occupied by the A-IoT network is within the time-frequency resource occupied by the LTE network (for example, in-band), and the quantity of symbols occupied by the control channel is 1 (that is, the first symbol quantity is 1), the state value of the first information is 00. When the time-frequency resource occupied by the A-IoT network is outside the time-frequency resource occupied by the LTE network (for example, non-in-band), for example, the deployment is the standalone deployment, the guardband deployment, or deployment without LTE, the state value of the first information is one of 11 and the reserved state.

It should be understood that, in the example A, the available resource of the first network does not include a time domain symbol occupied by the control channel, or the unavailable resource of the first network includes a time domain symbol occupied by the control channel.

For example, a first resource set is denoted as the available resource of the first network. The first resource set includes a time domain symbol identified by a first index, where the first index includes 0, 1, and 2, the first index includes 1 and 2, or the first index includes 2.

Specifically, when the time-frequency resource occupied by the A-IoT network is outside the time-frequency resource occupied by the LTE network, the first index includes 0, 1, and 2. When the control channel occupies one time domain symbol (for example, the control channel occupies the time domain symbol whose index is 0 in the subframe), the first index includes 1 and 2, but does not include 0. When the control channel occupies two time domain symbols (for example, the control channel occupies the time domain symbols whose indexes are 0 and 1 in the subframe), the first index includes 2, but does not include 0 and 1. When the control channel occupies three time domain symbols (for example, the control channel occupies the time domain symbols whose indexes are 0, 1, and 2 in the subframe), the first index does not include 0, 1, and 2.

It should be understood that, in the example A, when the state value of the first information includes the first value, the second value, the fourth value, the fifth value, or the sixth value, the first network and the second network are jointly deployed or coexist.

It should be understood that, in the example A, when the state value of the first information includes the third value or the seventh value, the time-frequency resource occupied by the first network is outside the time-frequency resource of the second network, or the second network is not deployed.

It should be understood that, in the example A, when the seventh value indicates that the second network is not deployed, or the seventh value is the reserved state, it may be understood as that the available resource of the first network is all resources, or the unavailable resource of the first network does not exist.

Example B: The first information is related to the second network and the third network, where the second network may be the LTE network, and the third network may be the NB-IoT network.

The example B is described as follows:
In a fourth aspect, the first information indicates that a time-frequency resource occupied by the first network is within a time-frequency resource of the second network and within a time-frequency resource of the third network; the first information indicates that a time-frequency resource occupied by the first network is within a time-frequency resource of the second network and outside a time-frequency resource of the third network; the first information indicates that a time-frequency resource occupied by the first network is outside a time-frequency resource of the second network and within a time-frequency resource of the third network; or the first information indicates that a time-frequency resource occupied by the first network is outside a time-frequency resource of the second network and outside a time-frequency resource of the third network.

It is easy to understand that "the time-frequency resource occupied by the first network is within the time-frequency resource of the second network" may alternatively be described as that a resource occupied by the first network is within a transmission bandwidth of the second network. "The time-frequency resource occupied by the first network is outside the time-frequency resource of the second network" may alternatively be described as that a resource occupied by the first network is not within a transmission bandwidth of the second network. In this case, the second network may exist, or may not exist.

Further, that the first information indicates that the time-frequency resource occupied by the first network is within the time-frequency resource of the second network and within the time-frequency resource of the third network includes: The first information indicates that the time-frequency resource occupied by the first network is within the time-frequency resource of the second network and within the time-frequency resource of the third network in a first state. That the first information indicates that the time-frequency resource occupied by the first network is within the time-frequency resource of the second network and outside the time-frequency resource of the third network includes: The first information indicates that the time-frequency resource occupied by the first network is within the time-frequency resource of the second network and outside the time-frequency resource of the third network in a first state. That the first information indicates that the time-frequency resource occupied by the first network is outside the time-frequency resource of the second network and within the time-frequency resource of the third network includes: The first information indicates that the time-frequency resource occupied by the first network is outside the time-frequency resource of the second network and within the time-frequency resource of the third network in a first state. That the first information indicates that the time-frequency resource occupied by the first network is outside the time-frequency resource of the second network and outside the time-frequency resource of the third network includes: The first information indicates that the time-frequency resource occupied by the first network is outside the time-frequency resource of the second network and outside the time-frequency resource of the third network in a first state. The first state includes at least one of the following: The first apparatus is in an idle state or a connected state, or the first apparatus has accessed the first network. For details, refer to the descriptions of the example A. Details are not described again.

In a fifth aspect, the first information indicates an antenna port quantity of the second network, and the antenna port quantity of the second network includes a first antenna port quantity, a second antenna port quantity, and a third antenna port quantity; and a state value of the first information includes a first value, a second value, a third value, and a fourth value, where the first value indicates the first antenna port quantity and/or the second antenna port quantity, and the second value indicates the first antenna port quantity and/or the second antenna port quantity; and the third value indicates the third antenna port quantity, and the fourth value indicates the third antenna port quantity.

Further, the first value indicates that the time-frequency resource occupied by the first network is within the time-frequency resource of the second network and within the time-frequency resource of the third network;
the second value indicates that the time-frequency resource occupied by the first network is within the time-frequency resource of the second network and outside the time-frequency resource of the third network, or the second value indicates that the time-frequency resource occupied by the first network is within the time-frequency resource of the second network and that the third network is not deployed;
the third value indicates that the time-frequency resource occupied by the first network is within the time-frequency resource of the second network and within the time-frequency resource of the third network; and
the fourth value indicates that the time-frequency resource occupied by the first network is within the time-frequency resource of the second network and outside the time-frequency resource of the third network, or the fourth value indicates that the time-frequency resource occupied by the first network is within the time-frequency resource of the second network and that the third network is not deployed.

For example, the second network is the LTE network, and an antenna port of the second network is an antenna port of a CRS. For example, the first antenna port quantity is 1, the second antenna port quantity is 2, and the third antenna port quantity is 4. For details, refer to the descriptions of the example A. Details are not described again.

For example, the state value of the first information is shown in Table 5.

**Table 5**

| Deployment mode | | | State value |
|---|---|---|---|
| LTE-in-band | Multiplexed with an NB-IoT | LTE antenna port quantity: 1/2 | 000 |
| | | LTE antenna port quantity: 4 | 001 |
| | Not multiplexed with the NB-IoT | LTE antenna port quantity: 1/2 | 010 |
| | | LTE antenna port quantity: 4 | 011 |

In Table 5, an example in which the first network is the A-IoT network, the second network is the LTE network, and the third network is the NB-IoT network is used. "LTE-in-band" indicates that a time-frequency resource occupied by the A-IoT network is within a time-frequency resource occupied by the LTE network. "Multiplexed with an NB-IoT" indicates that the time-frequency resource occupied by the A-IoT network is within a time-frequency resource occupied by the NB-IoT network. "Not multiplexed with the NB-IoT" indicates that the time-frequency resource occupied by the A-IoT network is outside the time-frequency resource occupied by the NB-IoT network. In this case, the NB-IoT network may exist, or may not exist.

In Table 5, the "LTE antenna port quantity: 1/2" indicates that a CRS antenna port quantity is 1 or 2, namely, the first antenna port quantity or the second antenna port quantity. The "LTE antenna port quantity: 4" indicates that a CRS antenna port quantity is 4, namely, the third antenna port quantity.

In Table 5, the state value of the first information is a bit value of three bits. Specifically, when the time-frequency resource occupied by the A-IoT network is within the time-frequency resource occupied by the LTE network and within the time-frequency resource occupied by the NB-IoT network, and the CRS antenna port quantity is 1 or 2, the state value of the first information is 000. When the time-frequency resource occupied by the A-IoT network is within the time-frequency resource occupied by the LTE network and within the time-frequency resource occupied by the NB-IoT network, and the CRS antenna port quantity is 4, the state value of the first information is 001. When the time-frequency resource occupied by the A-IoT network is within the time-frequency resource occupied by the LTE network and outside the time-frequency resource occupied by the NB-IoT network, and the CRS antenna port quantity is 1 or 2, the state value of the first information is 010. When the time-frequency resource occupied by the A-IoT network is within the time-frequency resource occupied by the LTE network and outside the time-frequency resource occupied by the NB-IoT network, and the CRS antenna port quantity is 4, the state value of the first information is 011.

In a sixth aspect, the first information indicates an antenna port quantity of the third network, and the antenna port quantity of the third network includes a fourth antenna port quantity and a fifth antenna port quantity; and the state value of the first information includes a fifth value, the fifth value indicates the fourth antenna port quantity and/or the fifth antenna port quantity, and resource mapping patterns corresponding to the fourth antenna port quantity and the fifth antenna port quantity are the same.

Further, the state value of the first information further includes a sixth value; the fifth value indicates that the time-frequency resource occupied by the first network is outside the time-frequency resource of the second network and within the time-frequency resource of the third network, or the fifth value indicates that the second network is not deployed and that the time-frequency resource occupied by the first network is within the time-frequency resource of the third network; and
the sixth value indicates that the time-frequency resource occupied by the first network is outside the time-frequency resource of the second network and outside the time-frequency resource of the third network, the sixth value indicates that the time-frequency resource occupied by the first network is outside the time-frequency resource of the second network and that the third network is not deployed, the sixth value indicates that the second network is not deployed and that the time-frequency resource occupied by the first network is outside the time-frequency resource of the third network, or the sixth value indicates that the second network is not deployed and that the third network is not deployed.

For example, the third network is the NB-IoT network, and an antenna port of the third network is an antenna port of an NRS. The fourth antenna port quantity is 1, and the fifth antenna port quantity is 2. The resource mapping pattern corresponding to the fourth antenna port quantity may be understood as a resource mapping pattern used when the fourth antenna port quantity is for sending an NRS, as shown in FIG. 12. In FIG. 12, the NRS occupies time domain symbols whose indexes are 5, 6, 12, and 13 in a slot. The resource mapping pattern corresponding to the fifth antenna port quantity may be understood as a resource mapping pattern used when the fifth antenna port quantity is for sending NRSs, as shown in FIG. 13. In FIG. 13, the NRSs occupy time domain symbols whose indexes are 5, 6, 12, and 13 in a slot. In this embodiment of this application, time domain resources occupied by the resource mapping patterns corresponding to the fourth antenna port quantity and the fifth antenna port quantity are the same.

For example, the state value of the first information is shown in Table 6.

**Table 6**

| Deployment mode | | | State value |
|---|---|---|---|
| Non-LTE-in-band | Multiplexed with an NB-IoT | NB-IoT antenna port quantity: 1/2 | 100 |
| | Not multiplexed with the NB-IoT | | 101 |

In Table 6, the example in which the first network is the A-IoT network, the second network is the LTE network, and the third network is the NB-IoT network is used. "Non-LTE-in-band" indicates that the time-frequency resource occupied by the A-IoT network is outside the time-frequency resource occupied by the LTE network. "Multiplexed with an NB-IoT" indicates that the time-frequency resource occupied by the A-IoT network is within the time-frequency resource occupied by the NB-IoT network. "Not multiplexed with the NB-IoT" indicates that the time-frequency resource occupied by the A-IoT network is outside the time-frequency resource occupied by the NB-IoT network.

In Table 6, the "NB-IoT antenna port quantity: 1/2" indicates that an NRS antenna port quantity is 1 or 2, namely, the fourth antenna port quantity or the fifth antenna port quantity.

In Table 6, the state value of the first information is a bit value of three bits. Specifically, when the time-frequency resource occupied by the A-IoT network is outside the time-frequency resource occupied by the LTE network and within the time-frequency resource occupied by the NB-IoT network, the state value of the first information is 100. When the time-frequency resource occupied by the A-IoT network is outside the time-frequency resource occupied by the LTE network and outside the time-frequency resource occupied by the NB-IoT network, the state value of the first information is 101.

It should be understood that, in the example B, the available resource of the first network does not include a time domain symbol occupied by the CRS and a time domain symbol occupied by the NRS, or the unavailable resource of the first network includes a time domain symbol occupied by the CRS and a time domain symbol occupied by the NRS.

For example, a second resource set is denoted as the available resource of the first network. Therefore, to avoid the CRS and the NRS, the second resource set includes a time domain symbol identified by at least one of the following indexes: 3, 9, and 10. The second resource set includes a time domain resource occupied by the first information. For example, a time domain resource occupied by the broadcast channel carrying the first information is included in the second resource set. Alternatively, the second resource set is further for transmission of a data signal of the first network and/or a control signal of the first network.

In a seventh aspect, the first information indicates a symbol quantity of a control channel of the second network.

For example, three symbol examples are used as an example. The symbol quantity includes a first symbol quantity, a second symbol quantity, and a third symbol quantity; and the state value of the first information includes a seventh value, an eighth value, and a ninth value, where the seventh value indicates the first symbol quantity, the eighth value indicates the second symbol quantity, and the ninth value indicates the third symbol quantity.

In this embodiment of this application, the control channel may include a PDCCH. The first symbol quantity may be 1. For example, the control channel occupies a time domain symbol whose index is 0 in a subframe. The second symbol quantity may be 2. For example, the control channel occupies time domain symbols whose indexes are 0 and 1 in a subframe. The third symbol quantity may be 3. For example, the control channel occupies time domain symbols whose indexes are 0, 1, and 2 in a subframe.

Further, the state value of the first information further includes a tenth value; the seventh value indicates that the time-frequency resource occupied by the first network is within the time-frequency resource of the second network; the eighth value indicates that the time-frequency resource occupied by the first network is within the time-frequency resource of the second network; the ninth value indicates that the time-frequency resource occupied by the first network is within the time-frequency resource of the second network; and the tenth value indicates that the time-frequency resource occupied by the first network is outside the time-frequency resource of the second network or that the second network is not deployed, or the tenth value is a reserved state.

For example, the state value of the first information is shown in Table 2. Details are not described again.

For another example, two symbol examples are used as an example. The symbol quantity includes a first symbol quantity and a second symbol quantity; and the state value of the first information includes a seventh value and an eighth value, where the seventh value indicates the first symbol quantity, and the eighth value indicates the second symbol quantity.

In this embodiment of this application, the control channel may include a PDCCH. The first symbol quantity may be 1. For example, the control channel occupies a time domain symbol whose index is 0 in a subframe. The second symbol quantity may be 2. For example, the control channel occupies time domain symbols whose indexes are 0 and 1 in a subframe.

Further, the state value of the first information further includes a tenth value; the seventh value indicates that the time-frequency resource occupied by the first network is within the time-frequency resource of the second network; the eighth value indicates that the time-frequency resource occupied by the first network is within the time-frequency resource of the second network; and the tenth value indicates that the time-frequency resource occupied by the first network is outside the time-frequency resource of the second network or that the second network is not deployed, or the tenth value is a reserved state.

For example, the state value of the first information is shown in Table 3. Details are not described again.

For still another example, two symbol examples are used as an example. The symbol quantity includes a first symbol quantity; and the state value of the first information includes a seventh value, where the seventh value indicates the first symbol quantity.

In this embodiment of this application, the control channel may include a PDCCH. The first symbol quantity may be 1. For example, the control channel occupies a time domain symbol whose index is 0 in a subframe.

Further, the state value of the first information further includes a tenth value; the seventh value indicates that the time-frequency resource occupied by the first network is within the time-frequency resource of the second network; and the tenth value indicates that the time-frequency resource occupied by the first network is outside the time-frequency resource of the second network or that the second network is not deployed, or the tenth value is a reserved state.

For example, the state value of the first information is shown in Table 4. Details are not described again.

It should be understood that, in the example B, the available resource of the first network does not include a time domain symbol occupied by the control channel, or the unavailable resource of the first network includes a time domain symbol occupied by the control channel.

For example, a second resource set is denoted as the available resource of the first network. The second resource set includes a time domain symbol identified by a second index, where the second index includes 0, 1, and 2, the second index includes 1 and 2, or the second index includes 2.

For example, when the time-frequency resource occupied by the A-IoT network is outside the time-frequency resource occupied by the LTE network, the second index includes 0, 1, and 2. When the control channel occupies one time domain symbol (for example, the control channel occupies the time domain symbol whose index is 0 in the subframe), the second index includes 1 and 2, but does not include 0. When the control channel occupies two time domain symbols (for example, the control channel occupies the time domain symbols whose indexes are 0 and 1 in the subframe), the second index includes 2, but does not include 0 and 1. When the control channel occupies three time domain symbols (for example, the control channel occupies the time domain symbols whose indexes are 0, 1, and 2 in the subframe), the second index does not include 0, 1, and 2.

It should be understood that, in the example B, when the state value of the first information includes the first value, the second value, the third value, the fourth value, the fifth value, the seventh value, the eighth value, or the ninth value, the first network and the second network are jointly deployed or coexist.

It should be understood that, in the example B, when the state value of the first information includes the sixth value or the tenth value, the time-frequency resource occupied by the first network is outside the time-frequency resource of the second network, or the second network is not deployed.

It should be understood that, in the example B, when the second network is not deployed, it may be understood as that the time-frequency resource occupied by the second network does not need to be avoided.

It should be understood that, in the example B, when the state value of the first information includes the first value, the third value, or the fifth value, the first network and the third network are jointly deployed or coexist.

It should be understood that, in the example B, when the state value of the first information includes the second value, the fourth value, or the sixth value, the time-frequency resource occupied by the first network is outside the time-frequency resource of the third network, or the third network is not deployed.

It should be understood that, in the example B, when the third network is not deployed, it may be understood as that the time-frequency resource occupied by the third network does not need to be avoided.

Example C: The first information is related to the second network, where the second network may be the NB-IoT network.

The example C is described as follows:
In an eighth aspect, the first information indicates that a time-frequency resource occupied by the first network is within a time-frequency resource of the second network, or the first information indicates that a time-frequency resource occupied by the first network is outside a time-frequency resource of the second network. For details, refer to the descriptions of the first aspect in the example A. Details are not described again.

In a ninth aspect, the first information indicates an antenna port quantity of the second network, and the antenna port quantity of the second network includes a first antenna port quantity and a second antenna port quantity; and a state value of the first information includes a first value, where the first value indicates the first antenna port quantity and/or the second antenna port quantity, and resource mapping patterns corresponding to the first antenna port quantity and the second antenna port quantity are the same.

Further, the state value of the first information further includes a second value; the first value indicates that the time-frequency resource occupied by the first network is within the time-frequency resource of the second network; and the second value indicates that the time-frequency resource occupied by the first network is outside the time-frequency resource of the second network or that the second network is not deployed, or the second value is a reserved state.

For example, the second network is the NB-IoT network, and an antenna port of the second network is an antenna port of an NRS. The first antenna port quantity is 1, and the second antenna port quantity is 2. The resource mapping pattern corresponding to the first antenna port quantity may be understood as a resource mapping pattern used when the first antenna port quantity is for sending a NRS, as shown in FIG. 12. In FIG. 12, the NRS occupies time domain symbols whose indexes are 5, 6, 12, and 13 in a slot. The resource mapping pattern corresponding to the second antenna port quantity may be understood as a resource mapping pattern used when the second antenna port quantity is for sending NRSs, as shown in FIG. 13. In FIG. 13, the NRSs occupy time domain symbols whose indexes are 5, 6, 12, and 13 in a slot. In this embodiment of this application, time domain resources occupied by the resource mapping patterns corresponding to the first antenna port quantity and the second antenna port quantity are the same.

For example, the state value of the first information is shown in Table 7.

**Table 7**

| Deployment mode | | State value |
|---|---|---|
| Multiplexed with an NB-IoT | NB-IoT antenna port quantity: 1/2 | 00 |
| Not multiplexed with the NB-IoT | | One of 01, 10, 11, or a reserved state |

In Table 7, an example in which the first network is the A-IoT network and the second network is the NB-IoT network is used. "Multiplexed with an NB-IoT" indicates that a time-frequency resource occupied by the A-IoT network is within a time-frequency resource occupied by the NB-IoT network. "Not multiplexed with the NB-IoT" indicates that the time-frequency resource occupied by the A-IoT network is outside the time-frequency resource occupied by the NB-IoT network.

In Table 7, the "NB-IoT antenna port quantity: 1/2" indicates that an NRS antenna port quantity is 1 or 2, namely, the first antenna port quantity or the second antenna port quantity.

In Table 7, the state value of the first information is a bit value of two bits. Specifically, when the time-frequency resource occupied by the A-IoT network is within the time-frequency resource occupied by the NB-IoT network, the state value of the first information is 00. When the time-frequency resource occupied by the A-IoT network is outside the time-frequency resource occupied by the NB-IoT network, the state value of the first information is one of 01, 10, 11, and the reserved state.

It should be understood that, in the example C, the available resource of the first network does not include a time domain symbol occupied by the NRS, or the unavailable resource of the first network includes a time domain symbol occupied by the NRS.

For example, the third resource set is denoted as the available resource of the first network. Therefore, to avoid the NRS, the third resource set includes a time domain symbol identified by at least one of the following indexes: 0, 1, 2, 3, 4, 7, 8, 9, 10, and 11. The third resource set includes a time domain resource occupied by the first information. For example, a time domain resource occupied by the broadcast channel carrying the first information is included in the third resource set. Alternatively, the third resource set is further for transmission of a data signal of the first network and/or a control signal of the first network.

It should be understood that, in the example C, when the state value of the first information includes the first value, the first network and the second network are jointly deployed or coexist.

It should be understood that, in the example C, when the state value of the first information includes the second value, the time-frequency resource occupied by the first network is outside the time-frequency resource of the second network, or the second network is not deployed.

It should be understood that, in the example C, when the second value indicates that the second network is not deployed, or the second value is the reserved state, it may be understood as that the available resource of the first network is all resources, or the unavailable resource of the first network does not exist.

In some embodiments, in a manner, the first information occupies at least one subframe. In other words, all time domain symbols in one subframe may be for transmission of the first information. Alternatively, in another manner, the first information occupies at least one radio frame. In other words, all time domain symbols in one radio frame may be for transmission of the first information. The foregoing two manners may be understood as that a resource consecutive in time domain is allocated to the first apparatus.

In other words, a resource for transmission of the first information is not occupied by another network, for example, is not occupied by the LTE network, the NB-IoT network, and an NR network, to effectively avoid interference of a broadcast channel, a data channel, and a control channel in the foregoing networks (namely, the LTE network, the NB-IoT network, and the NR network) to the first information, and help ensure transmission performance of the first information.

In some embodiments, when the first apparatus receives the first information, the time-frequency resource occupied by the first network is outside the time-frequency resource of the second network. It may be understood as that, when the first apparatus receives the first information, the deployment of the first network and the second network is the non-in-band deployment, to effectively avoid interference of a broadcast channel, a data channel, and a control channel in the second network to the first information, and help ensure transmission performance of the first information.

Optionally, after the first apparatus receives the first information, a deployment manner of the first network and the second network may change, for example, from the non-in-band deployment to the in-band deployment. For details, refer to the descriptions of the first state in the example A. Details are not described again.

In some embodiments, as shown in FIG. 15, the resource indication method 1400 in this embodiment of this application further includes the following operations:
S1411: The first apparatus receives second information.

The second information indicates a first resource and/or a second resource.

For example, the first resource is consecutive in frequency domain, and the first resource is used by the first apparatus to access the first network. It may be understood as that the first apparatus accesses the first network on the first resource. For example, the first apparatus performs a random access process on the first resource, to access the first network. Because the first resource is consecutive in frequency domain, impact of another network on information transmission on the first resource is effectively avoided. This helps reduce a probability that the access process is interrupted and reduce an access delay.

Further, the first resource is consecutive in time domain. Because the first resource is consecutive in time domain, the impact of the another network on the information transmission on the first resource can also be avoided. This helps further reduce the probability that the access process is interrupted and reduce the access delay.

For example, the second resource is consecutive in frequency domain, and the second resource is used by the first apparatus to synchronize with the first network. It may be understood as that the second apparatus of the first network sends a synchronization signal on the second resource. Accordingly, the first apparatus receives the synchronization signal on the first resource, to synchronize with the first network. Because the second resource is consecutive in frequency domain, impact of the another network on information transmission on the second resource is effectively avoided. This helps reduce a probability that a synchronization process is interrupted and reduce a synchronization delay.

Further, the second resource is consecutive in time domain. Because the second resource is consecutive in time domain, the impact of the another network on the information transmission on the second resource can also be avoided. This helps further reduce the probability that the synchronization process is interrupted and reduce the synchronization delay.

It should be noted that, in embodiments of this application, an X^{th} value and a Y^{th} value are different from each other. A bit value is used as an example. When two bits are used, the X^{th} value may be 00, and the Y^{th} value may be one of 01, 10, and 11. When three bits are used, the X^{th} value may be 001, the Y^{th} value may be 010 or the like.

It should be noted that, in embodiments of this application, for descriptions of the time domain, for example, the time domain symbol, the OFDM symbol, the slot, the subframe, and the radio frame, refer to the descriptions of the 3GPP-related technical specifications. Details are not described again. Similarly, for descriptions of the frequency domain, for example, the RB and a subcarrier, refer to the descriptions of the 3GPP-related technical specifications. Details are not described again.

It may be understood that, in the foregoing embodiments, the method and/or steps implemented by the first apparatus may alternatively be implemented by a component (for example, a processor, a chip, a chip system, a circuit, a logical module, or software) that may be used in the first apparatus, and the method and/or steps implemented by the second apparatus may alternatively be implemented by a component (for example, a processor, a chip, a chip system, a circuit, a logical module, or software) that may be used in the second apparatus. The chip system may include a chip, or the chip system may include a chip and another discrete device.

It may be understood that, to implement the foregoing functions, the communication apparatus includes a corresponding hardware structure and/or software module for performing the functions. A person skilled in the art should be easily aware that, with reference to the units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example, and is merely logical function division. In actual implementation, another division manner may be used.

FIG. 16 is a diagram of a structure of a communication apparatus 160. The communication apparatus 160 includes a processing module 1601 and a transceiver module 1602. The communication apparatus 160 may be configured to implement the functions of the first apparatus, the second apparatus, the third apparatus, or the fourth apparatus.

In some embodiments, the communication apparatus 160 may further include a storage module (not shown in FIG. 16), configured to store program instructions and data.

In some embodiments, the transceiver module 1602 may also be referred to as a transceiver unit, and is configured to implement a sending function and/or a receiving function. The transceiver module 1602 may include a transceiver circuit, a transceiver, or a communication interface.

In some embodiments, the transceiver module 1602 may include a receiving module and a sending module, respectively configured to perform receiving-type steps and sending-type steps performed by the first apparatus, the second apparatus, the third apparatus, or the fourth apparatus in the foregoing method embodiments, and/or configured to support other processes of the technologies described in this specification. The processing module 1601 may be configured to perform processing-type (for example, determining) steps performed by the first apparatus, the second apparatus, the third apparatus, or the fourth apparatus in the foregoing method embodiments, and/or configured to support other processes of the technologies described in this specification.

In some embodiments, when the communication apparatus 160 is configured to implement the functions of the first apparatus:
The transceiver module 1602 is configured to receive first information, and the processing module 1601 is configured to determine an available resource or an unavailable resource of a first network based on the first information.

Optionally, the transceiver module 1602 is further configured to receive second information, where the second information indicates a first resource and/or a second resource, the first resource is consecutive in frequency domain, the first resource is used by the first apparatus to access the first network, the second resource is consecutive in frequency domain, and the second resource is used by the first apparatus to synchronize with the first network.

In some embodiments, when the communication apparatus 160 is configured to implement the functions of the second apparatus:
The transceiver module 1602 is configured to send first information, where the first information indicates an available resource or an unavailable resource of a first network.

Optionally, the processing module 1601 is configured to determine the first information.

Optionally, before sending the first information, the processing module 1601 is further configured to generate a broadcast channel; and that the transceiver module 1602 is configured to send the first information includes: sending the first information through the broadcast channel.

In some embodiments, a first network and a second network are jointly deployed, and the first network and a third network are not jointly deployed. When the communication apparatus 160 is configured to implement the functions of the third apparatus:
The transceiver module 1602 is configured to send first information, where the first information indicates an available resource or an unavailable resource of a first network. The third apparatus is a communication apparatus of the second network.

Optionally, the processing module 1601 is configured to determine the first information.

Optionally, before sending the first information, the processing module 1601 is further configured to generate a broadcast channel; and that the transceiver module 1602 is configured to send the first information includes: sending the first information through the broadcast channel.

In some embodiments, a first network, a second network, and a third network are jointly deployed. When the communication apparatus 160 is configured to implement the functions of the fourth apparatus:
The transceiver module 1602 is configured to send first information, where the first information indicates an available resource or an unavailable resource of a first network. The fourth apparatus is a communication apparatus of the third network.

Optionally, the processing module 1601 is configured to determine the first information.

Optionally, before sending the first information, the processing module 1601 is further configured to generate a broadcast channel; and that the transceiver module 1602 is configured to send the first information includes: sending the first information through the broadcast channel.

All related content of the steps in the foregoing method embodiments may be cited in function descriptions of the corresponding functional modules. Details are not described herein again.

Optionally, in this application, that a transceiver module receives/sends information may alternatively be understood as that a processing module receives/sends the information via the transceiver module. That the processing module receives/sends the information via the transceiver module may alternatively be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 160 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that may provide the foregoing functions.

In some embodiments, when the communication apparatus 160 in FIG. 16 is a chip or a chip system, a function/an implementation process of the transceiver module 1602 may be implemented through an input/output interface (or a communication interface) of the chip or the chip system, and a function/an implementation process of the processing module 1601 may be implemented by using a processor (or a processing circuit) of the chip or the chip system.

The communication apparatus 160 provided in this embodiment may perform the foregoing methods. Therefore, for technical effects that can be achieved by the communication apparatus 160, refer to the foregoing method embodiments. Details are not described herein again.

In a possible product form, the first apparatus, the second apparatus, the third apparatus, or the fourth apparatus in embodiments of this application may be alternatively implemented by using the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform the functions described in this application.

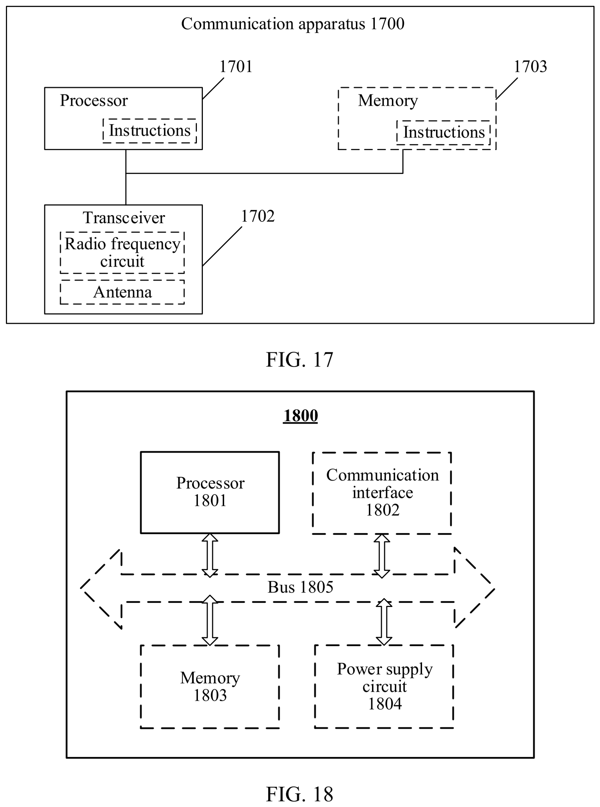

In another possible product form, the first apparatus, the second apparatus, the third apparatus, or the fourth apparatus in embodiments of this application may be implemented by using a general bus architecture. For ease of description, FIG. 17 is a diagram of a structure of a communication apparatus 1700 according to an embodiment of this application. The communication apparatus 1700 includes a processor 1701 and a transceiver 1702. The communication apparatus 1700 may be a first apparatus, or a chip or a chip system in the first apparatus; the communication apparatus 1700 may be a second apparatus, or a chip or a module in the second apparatus; the communication apparatus 1700 may be a third apparatus, or a chip or a module in the third apparatus; or the communication apparatus 1700 may be a fourth apparatus, or a chip or a module in the fourth apparatus. FIG. 17 shows only main components in the communication apparatus 1700. In addition to the processor 1701 and the transceiver 1702, the communication apparatus 1700 may further include a memory 1703 and an input/output apparatus (which is not shown in the figure).

Optionally, the processor 1701 is mainly configured to: process a communication protocol and communication data, control the entire communication apparatus, execute a software program, and process data of the software program. The memory 1703 is mainly configured to store the software program and the data. The transceiver 1702 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user, and output data to the user.

Optionally, the processor 1701, the transceiver 1702, and the memory 1703 may be connected through a communication bus.

After the communication apparatus is powered on, the processor 1701 may read the software program in the memory 1703, interpret and execute instructions of the software program, and process the data of the software program. When data needs to be sent wirelessly, the processor 1701 performs baseband processing on the to-be-sent data, and then outputs a baseband signal to the radio frequency circuit. The radio frequency circuit performs radio frequency processing on the baseband signal, and then sends a radio frequency signal to the outside in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 160 may be in a form of the communication apparatus 1700 shown in FIG. 17.

In an example, the function/the implementation process of the processing module 1601 in FIG. 16 may be implemented by the processor 1701 in the communication apparatus 1700 shown in FIG. 17 by invoking the computer-executable instructions stored in the memory 1703. The function/the implementation process of the transceiver module 1602 in FIG. 16 may be implemented through the transceiver 1702 in the communication apparatus 1700 shown in FIG. 17.

In still another possible product form, the first apparatus, the second apparatus, the third apparatus, or the fourth apparatus in this application may use a composition structure shown in FIG. 18, or include components shown in FIG. 18. FIG. 18 is a diagram of composition of a communication apparatus 1800 according to this application.

As shown in FIG. 18, the communication apparatus 1800 includes at least one processor 1801. Optionally, the communication apparatus further includes a communication interface 1802.

When related program instructions are executed in the at least one processor 1801, the apparatus 1800 may be enabled to implement the method provided in any one of the foregoing embodiments and any possible design thereof. Alternatively, the processor 1801 is configured to implement, through a logic circuit or by executing code instructions, the method provided in any one of the foregoing embodiments and any possible design thereof.

The communication interface 1802 may be configured to receive the program instructions, and transmit the program instructions to the processor. Alternatively, the communication interface 1802 may be configured to perform communication interaction between the communication apparatus 1800 and another communication device, for example, exchange control signaling and/or service data. For example, the communication interface 1802 may be configured to receive a signal from an apparatus other than the communication apparatus 1800, and transmit the signal to the processor 1801; or send a signal from the processor 1801 to a communication apparatus other than the communication apparatus 1800.

Optionally, the communication interface 1802 may be a code and/or data read/write interface circuit, or the communication interface 1802 may be a signal transmission interface circuit between a communication processor and a transceiver, or a pin of a chip.

Optionally, the communication apparatus 1800 may further include at least one memory 1803, and the memory 1803 may be configured to store the related program instructions and/or data that are/is needed. It should be noted that the memory 1803 may exist independently of the processor 1801, or may be integrated with the processor 1801. The memory 1803 may be inside the communication apparatus 1800, or may be outside the communication apparatus 1800. This is not limited.

Optionally, the communication apparatus 1800 may further include a power supply circuit 1804, and the power supply circuit 1804 may be configured to supply power to the processor 1801. The power supply circuit 1804 may be located in a same chip as the processor 1801, or may be located in a chip other than a chip in which the processor 1801 is located.

Optionally, the communication apparatus 1800 may further include a bus 1805, and parts of the communication apparatus 1800 may be interconnected through the bus 1805.

In some embodiments, in hardware implementation, a person skilled in the art may figure out that the communication apparatus 160 shown in FIG. 16 may be in a form of the communication apparatus 1800 shown in FIG. 18.

In an example, the function/the implementation process of the processing module 1601 in FIG. 16 may be implemented by the processor 1801 in the communication apparatus 1800 shown in FIG. 18 by invoking the computer-executable instructions stored in the memory 1803. The function/the implementation process of the transceiver module 1602 in FIG. 16 may be implemented through the communication interface 1802 in the communication apparatus 1800 shown in FIG. 18.

It should be noted that the structure shown in FIG. 18 does not constitute a specific limitation on the first apparatus, the second apparatus, the third apparatus, or the fourth apparatus. For example, in some other embodiments of this application, the first apparatus, the second apparatus, the third apparatus, or the fourth apparatus may include more or fewer components than those shown in the figure, some components may be combined, some components may be split, or the components may be differently arranged. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in this embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may alternatively not include a memory.

In another possible implementation, the communication apparatus further includes an interface circuit. The interface circuit is a code/data read/write interface circuit. The interface circuit is configured to receive computer-executable instructions (the computer-executable instructions are stored in a memory, and may be directly read from the memory, or may be read via another device), and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is the chip system, the communication apparatus may include a chip, or may include the chip and another discrete device. This is not specifically limited in embodiments of this application.

This application further provides a computer-readable storage medium. The computer-readable storage medium stores a computer program or instructions. When the computer program or the instructions are executed by a computer, the functions in any one of the foregoing method embodiments are implemented.

This application further provides a computer program product. When the computer program product is executed by a computer, the functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, the apparatuses, and the methods described in this application may alternatively be implemented in another manner. For example, the foregoing apparatus embodiments are merely examples. For example, the division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may be physically separated or not, that is, may be located at one position, or may be distributed on a plurality of network units. Components displayed as units may be or may not be physical units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments herein, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to this application without departing from the scope of this application. Correspondingly, the specification and accompanying drawings are merely example descriptions of this application defined by the appended claims, and are considered as covering any of or all modifications, variations, combinations, or equivalents within the scope of this application. It is clear that a person skilled in the art can make various modifications and variations to this application without departing from the scope of this application. This application is intended to cover these modifications and variations of this application provided that these modifications and variations fall within the scope of the claims of this application and their equivalent technologies.

## Claims

1. A resource indication method, comprising:
receiving first information; and
determining an available resource or an unavailable resource of a first network based on the first information.

2. The method according to claim 1, wherein
the first information indicates that a time-frequency resource occupied by the first network is within a time-frequency resource of a second network; or
the first information indicates that a time-frequency resource occupied by the first network is outside a time-frequency resource of a second network.

3. The method according to claim 2, wherein
that the first information indicates that the time-frequency resource occupied by the first network is within the time-frequency resource of the second network comprises:
the first information indicates that the time-frequency resource occupied by the first network is within the time-frequency resource of the second network in a first state; or
that the first information indicates that the time-frequency resource occupied by the first network is outside the time-frequency resource of the second network comprises:
the first information indicates that the time-frequency resource occupied by the first network is outside the time-frequency resource of the second network in a first state, wherein
the first state comprises at least one of the following: a first apparatus is in an idle state or a connected state, or the first apparatus has accessed the first network; and the method is applied to the first apparatus.

4. The method according to any one of claims 1 to 3, wherein
the first information indicates an antenna port quantity of the second network, and the antenna port quantity comprises a first antenna port quantity, a second antenna port quantity, and a third antenna port quantity; and
a state value of the first information comprises a first value and a second value, wherein
the first value indicates the first antenna port quantity and/or the second antenna port quantity, and resource mapping patterns corresponding to the first antenna port quantity and the second antenna port quantity are the same; and the second value indicates the third antenna port quantity.

5. The method according to claim 4, wherein the first antenna port quantity is 1, the second antenna port quantity is 2, and the third antenna port quantity is 4.

6. The method according to claim 4 or 5, wherein
the state value of the first information further comprises a third value;
the first value indicates that the time-frequency resource occupied by the first network is within the time-frequency resource of the second network;
the second value indicates that the time-frequency resource occupied by the first network is within the time-frequency resource of the second network; and
the third value indicates that the time-frequency resource occupied by the first network is outside the time-frequency resource of the second network or that the second network is not deployed, or the third value is a reserved state.

7. The method according to any one of claims 4 to 6, wherein the antenna port is an antenna port of a cell-specific reference signal CRS; and
the available resource of the first network does not comprise a time domain symbol occupied by the CRS, or the unavailable resource of the first network comprises a time domain symbol occupied by the CRS.

8. The method according to any one of claims 4 to 7, wherein
the first information indicates a symbol quantity of a control channel of the second network, and the symbol quantity comprises a first symbol quantity, a second symbol quantity, and a third symbol quantity; and
the state value of the first information comprises a fourth value, a fifth value, and a sixth value, wherein the fourth value indicates the first symbol quantity, the fifth value indicates the second symbol quantity, and the sixth value indicates the third symbol quantity.

9. The method according to claim 8, wherein
the state value of the first information further comprises a seventh value;
the fourth value indicates that the time-frequency resource occupied by the first network is within the time-frequency resource of the second network;
the fifth value indicates that the time-frequency resource occupied by the first network is within the time-frequency resource of the second network;
the sixth value indicates that the time-frequency resource occupied by the first network is within the time-frequency resource of the second network; and
the seventh value indicates that the time-frequency resource occupied by the first network is outside the time-frequency resource of the second network or that the second network is not deployed, or the seventh value is the reserved state.

10. The method according to claim 8 or 9, wherein
the available resource of the first network does not comprise a time domain symbol occupied by the control channel; or
the unavailable resource of the first network comprises a time domain symbol occupied by the control channel.

11. The method according to any one of claims 8 to 10, wherein
when the state value of the first information comprises the first value, the second value, the fourth value, the fifth value, or the sixth value, the first network and the second network are jointly deployed or coexist.

12. The method according to claim 1, wherein
the first information indicates that a time-frequency resource occupied by the first network is within a time-frequency resource of a second network and within a time-frequency resource of a third network;
the first information indicates that a time-frequency resource occupied by the first network is within a time-frequency resource of a second network and outside a time-frequency resource of a third network;
the first information indicates that a time-frequency resource occupied by the first network is outside a time-frequency resource of a second network and within a time-frequency resource of a third network; or
the first information indicates that a time-frequency resource occupied by the first network is outside a time-frequency resource of a second network and outside a time-frequency resource of a third network.

13. The method according to claim 1 or 12, wherein
the first information indicates an antenna port quantity of the second network, and the antenna port quantity of the second network comprises a first antenna port quantity, a second antenna port quantity, and a third antenna port quantity; and
a state value of the first information comprises a first value, a second value, a third value, and a fourth value, wherein
the first value indicates the first antenna port quantity and/or the second antenna port quantity, the second value indicates the first antenna port quantity and/or the second antenna port quantity, and resource mapping patterns corresponding to the first antenna port quantity and the second antenna port quantity are the same; and
the third value indicates the third antenna port quantity, and the fourth value indicates the third antenna port quantity.

14. The method according to claim 13, wherein
the first value indicates that the time-frequency resource occupied by the first network is within the time-frequency resource of the second network and within the time-frequency resource of the third network;
the second value indicates that the time-frequency resource occupied by the first network is within the time-frequency resource of the second network and outside the time-frequency resource of the third network, or indicates that the time-frequency resource occupied by the first network is within the time-frequency resource of the second network and that the third network is not deployed;
the third value indicates that the time-frequency resource occupied by the first network is within the time-frequency resource of the second network and within the time-frequency resource of the third network; and
the fourth value indicates that the time-frequency resource occupied by the first network is within the time-frequency resource of the second network and outside the time-frequency resource of the third network, or indicates that the time-frequency resource occupied by the first network is within the time-frequency resource of the second network and that the third network is not deployed.

15. The method according to claim 13 or 14, wherein an antenna port of the second network is an antenna port of a cell-specific reference signal CRS; and
the available resource of the first network does not comprise a time domain symbol occupied by the CRS, or the unavailable resource of the first network comprises a time domain symbol occupied by the CRS.

16. The method according to any one of claims 13 to 15, wherein
the first information indicates an antenna port quantity of the third network, and the antenna port quantity of the third network comprises a fourth antenna port quantity and a fifth antenna port quantity; and
the state value of the first information comprises a fifth value, the fifth value indicates the fourth antenna port quantity and/or the fifth antenna port quantity, and resource mapping patterns corresponding to the fourth antenna port quantity and the fifth antenna port quantity are the same.

17. The method according to claim 16, wherein
the state value of the first information further comprises a sixth value;
the fifth value indicates that the time-frequency resource occupied by the first network is outside the time-frequency resource of the second network and within the time-frequency resource of the third network, or indicates that the second network is not deployed and that the time-frequency resource occupied by the first network is within the time-frequency resource of the third network; and
the sixth value indicates that the time-frequency resource occupied by the first network is outside the time-frequency resource of the second network and outside the time-frequency resource of the third network, indicates that the time-frequency resource occupied by the first network is outside the time-frequency resource of the second network and that the third network is not deployed, indicates that the second network is not deployed and that the time-frequency resource occupied by the first network is outside the time-frequency resource of the third network, or indicates that the second network is not deployed and that the third network is not deployed.

18. The method according to claim 16 or 17, wherein an antenna port of the third network is an antenna port of a narrowband reference signal NRS; and
the available resource of the first network does not comprise a time domain symbol occupied by the NRS, or the unavailable resource of the first network comprises a time domain symbol occupied by the NRS.

19. The method according to any one of claims 1 to 18, wherein the method further comprises:
receiving second information, wherein the second information indicates a first resource and/or a second resource, the first resource is consecutive in frequency domain, the first resource is used by the first apparatus to access the first network, the second resource is consecutive in frequency domain, and the second resource is used by the first apparatus to synchronize with the first network.

20. The method according to claim 19, wherein
the first resource is consecutive in time domain; or
the second resource is consecutive in time domain.

21. The method according to any one of claims 1 to 18, wherein
the first information occupies at least one subframe; or
the first information occupies at least one radio frame.

22. The method according to any one of claims 1 to 18, wherein when the first apparatus receives the first information, the time-frequency resource occupied by the first network is outside the time-frequency resource of the second network.

23. A resource indication method, comprising:
sending first information, wherein the first information indicates an available resource or an unavailable resource of a first network.

24. The method according to claim 23, wherein the method further comprises determining the first information.

25. The method according to claim 23 or 24, wherein before sending the first information, the method further comprises: generating a broadcast channel; and
the sending the first information comprises: sending the first information through the broadcast channel.

26. A first apparatus, comprising a module that executes any one of claims 1 to 22.

27. A second apparatus, comprising a module that executes any one of claims 23 to 25.

28. A computer-readable storage medium, storing a computer program or instructions, wherein when the computer program or the instructions are executed on a first apparatus, the first apparatus is enabled to perform the method according to any one of claims 1 to 22; or when the computer program or the instructions are executed on a second apparatus, the second apparatus is enabled to perform the method according to any one of claims 23 to 25.

29. A computer program product, wherein when the computer program product runs on a first apparatus, the first apparatus is enabled to perform the method according to any one of claims 1 to 22; or when the computer program product runs on a second apparatus, the second apparatus is enabled to perform the method according to any one of claims 23 to 25.

30. A communication system, comprising a first apparatus and a second apparatus, wherein the first apparatus is configured to perform the method according to any one of claims 1 to 22, and the second apparatus is configured to perform the method according to any one of claims 23 to 25.
